(19)

Europäisches
Patentamt

European
Patent Office

Office européen
des brevets

(11)  **EP 4 733 983 A1**

(12)  # EUROPEAN PATENT APPLICATION

(43) Date of publication:
**29.04.2026   Bulletin 2026/18**

(21) Application number: **25203978.9**

(22) Date of filing: **23.09.2025**

(51) International Patent Classification (IPC):
**G06K 7/14** *(2006.01)*       **G06V 10/25** *(2022.01)*

(52) Cooperative Patent Classification (CPC):
**G06K 7/1443; G06K 7/1482; G06V 10/25**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **23.10.2024   CN 202411488427**

(71) Applicant: **Hand Held Products, Inc.**
**Charlotte, NC 28202 (US)**

(72) Inventors:
  • **XIAN, Tao**
    **Charlotte, 28202 (US)**
  • **HAGGERTY, Thomas**
    **Charlotte, 28202 (US)**
  • **BIZOARA, Manjul**
    **Charlotte, 28202 (US)**

  • **YOUNGBLOOD, Eric**
    **Charlotte, 28202 (US)**
  • **VAN HORN, Erik**
    **Charlotte, 28202 (US)**
  • **GOLWALA, Abhishek Dipakkumar**
    **Charlotte, 28202 (US)**
  • **WU, Jin**
    **Charlotte, 28202 (US)**
  • **LIU, Hongyan**
    **Charlotte, 28202 (US)**
  • **WILZ, David M.**
    **Charlotte, 28202 (US)**
  • **RAVI CHANDRAN, Abhay**
    **Charlotte, 28202 (US)**

(74) Representative: **Haseltine Lake Kempner LLP**
**Cheapside House**
**138 Cheapside**
**London EC2V 6BJ (GB)**

(54)  **BARCODE DECODER DEVICE AND ASSOCIATED METHOD**

(57)     Systems, apparatuses, methods, and computer program products are provided herein. The method comprises: identifying, by one or more processors, image data, wherein the image data is representative of an image comprising one or more barcodes; generating, by a neural processing unit, region of interest image data by applying the image data to a region of interest machine learning model, wherein the region of interest image data is representative of one or more regions of interest in the image, wherein each of the one or more regions of interest are associated with at least one corresponding barcode of the one or more barcodes; generating, by the one or more processors, decoded barcode data by applying the region of interest image data to a first decoder, wherein the first decoder is a region of interest fast linear decoder or a region of interest integrated decoder; and initiating, by the one or more processors, performance of one or more actions based at least in part on the decoded barcode data.

**FIG. 1**

**Description**

**TECHNOLOGICAL FIELD**

Embodiments of the present disclosure relate generally to a barcode decoder device and associated method.

**BACKGROUND**

Applicant has identified many technical challenges and difficulties associated with barcode decoder device and associated methods. Through applied effort, ingenuity, and innovation, Applicant has solved problems related to barcode decoder device and associated methods by developing solutions embodied in the present disclosure, which are described in detail below.

**BRIEF SUMMARY**

Various embodiments described herein relate to barcode decoder devices and associated methods.
In accordance with one aspect of the disclosure, a method is provided. In some embodiments, the method includes identifying, by one or more processors, image data. In some embodiments, the image data is representative of an image comprising one or more barcodes. In some embodiments, the method includes generating, by a neural processing unit, region of interest image data by applying the image data to a region of interest machine learning model. In some embodiments, the region of interest image data is representative of one or more regions of interest in the image. In some embodiments, each of the one or more regions of interest are associated with at least one corresponding barcode of the one or more barcodes. In some embodiments, the method includes generating, by the one or more processors, decoded barcode data by applying the region of interest image data to a first decoder. In some embodiments, the first decoder comprises a region of interest fast linear decoder or a region of interest integrated decoder. In some embodiments, the method includes initiating, by the one or more processors, performance of one or more actions in based at least in part on the decoded barcode data.
In some embodiments, the method includes identifying, by the one or more processors, second image data.
In some embodiments, the second image data is representative of a second image comprising one or more other barcodes.
In some embodiments, the method includes generating, by the one or more processors, second decoded barcode data by applying the image data to a fast linear decoder.
In some embodiments, the method includes identifying, by the one or more processors, second image data.
In some embodiments, the second image data is representative of a second image comprising one or more other barcodes.
In some embodiments, the method includes generating, by the one or more processors, second decoded barcode data by applying the image data to an integrated decoder.
In some embodiments, the method includes identifying, by the one or more processors, second image data.
In some embodiments, the second image data is representative of a second image comprising one or more other barcodes.
In some embodiments, the method includes applying the second image data to the region of interest machine learning model.
In some embodiments, the method includes determining, by the one or more processors, that the region of interest machine learning model failed to generate second region of interest image data based on the second image data.
In some embodiments, the method includes generating, by the one or more processors, second decoded barcode data by applying the image data to a fast linear decoder or an integrated decoder.
In some embodiments, the method includes identifying, by the one or more processors, second image data.
In some embodiments, the second image data is representative of a second image comprising one or more other barcodes.
In some embodiments, the method includes determining, by the one or more processors, that the region of interest machine learning model does not meet a training threshold.
In some embodiments, the method includes generating, by the one or more processors, second decoded barcode data by applying the image data to a fast linear decoder or an integrated decoder.
In some embodiments, the method includes processing, by the neural processing unit, the region of interest image data in one or more of a plurality of preprocessing machine learning models.
In some embodiments, wherein the plurality of preprocessing machine learning models comprises one or more of a light preprocessing machine learning model, a contrast preprocessing machine learning model, a resolution preprocessing machine learning model, or a deblurring preprocessing machine learning model.

In some embodiments, the region of interest machine learning model is associated with one of a plurality of integer data types.

In some embodiments, the plurality of integer data types includes a 32-bit integer data type, a 16-bit integer data type, an 8-bit integer data type, and a 4-bit integer data type.

In some embodiments, the method includes identifying, by the one or more processors, second image data.

In some embodiments, the second image data is representative of a second image comprising optical character information.

In some embodiments, the method includes generating, by the neural processing unit, second region of interest image data by applying the second image data to the region of interest machine learning model.

In some embodiments, the second region of interest image data is representative of one or more second regions of interest in the image.

In some embodiments, each of the one or more second regions of interest are associated with the optical character information.

In some embodiments, the method includes converting, by the one or more processors, the region of interest machine learning model from a floating-point data type to an integer data type.

In some embodiments, the method includes initializing the region of interest machine learning model in response to receiving a start trigger.

In some embodiments, the method includes training, by the neural processing unit, the region of interest machine learning model based at least in part on one or more of historical image data, historical region of interest image data, or historical decoded barcode data.

In some embodiments, the method includes determining, by the one or more processors, a number of regions of interest in the one or more regions of interest.

In some embodiments, the method includes determining, by the one or more processors, a number of pixels in each region of interest in the one or more regions of interest.

In some embodiments, the method includes generating a region of interest timeout parameter based on the number of regions of interest and the number of pixels in each region of interest.

In some embodiments, the method includes applying, by the one or more processors, second region of interest image data to the first decoder.

In some embodiments, the method includes determining, by the one or more processors, that the region of interest timeout parameter has been exceeded.

In some embodiments, the method includes causing the first decoder to terminate in response to the determination that the region of interest timeout parameter has been exceeded.

In some embodiments, the method includes generating, by the one or more processors, one or more status flags associated with the region of interest image data.

In some embodiments, the method includes storing, by the one or more processors, the one or more status flags.

In some embodiments, initiating, by the one or more processors, performance of one or more actions comprises outputting, by the one or more processors, an audible alert.

In some embodiments, initiating, by the one or more processors, performance of one or more actions comprises capturing, by the one or more processors, second image data in response to generating the decoded barcode data.

In some embodiments, initiating, by the one or more processors, performance of one or more actions comprises generating, by the one or more processors, a decoded barcode interface component.

In some embodiments, the decoded barcode interface component comprises one or more decoded barcode interface elements.

In some embodiments, initiating, by the one or more processors, performance of one or more actions comprises causing, by the one or more processors, the decoded barcode interface component to be rendered to an operations interface.

In some embodiments, initiating, by the one or more processors, performance of one or more actions comprises transmitting, by the one or more processors, the decoded barcode data to an external computing device.

In accordance with another aspect of the disclosure, an apparatus is provided. In some embodiments, the apparatus includes memory and one or more processors communicatively coupled to the memory. In some embodiments, the one or more processors are configured to identifying, by the one or more processors, image data. In some embodiments, the image data is representative of an image comprising one or more barcodes. In some embodiments, the one or more processors are configured to generating, by a neural processing unit, region of interest image data by applying the image data to a region of interest machine learning model. In some embodiments, the region of interest image data is representative of one or more regions of interest in the image. In some embodiments, each of the one or more regions of interest are associated with at least one corresponding barcode of the one or more barcodes. In some embodiments, the one or more processors are configured to generating, by the one or more processors, decoded barcode data by applying the region of interest image data to a first decoder. In some embodiments, the first decoder comprises a region of interest fast linear decoder or a region of interest integrated decoder. In some embodiments, the one or more processors are configured to initiating, by the one or more processors, performance of one or more actions in based at least in part on the decoded barcode data.

In accordance with another aspect of the disclosure, a computer program product is provided. In some embodiments, the computer program product includes at least one non-transitory computer-readable storage medium having computer program code stored thereon. In some embodiments, the computer program code, in execution with one or more processors, configures the computer program product for identifying, by the one or more processors, image data. In some embodiments, the image data is representative of an image comprising one or more barcodes. In some embodiments, the computer program code, in execution with one or more processors, configures the computer program product for generating, by a neural processing unit, region of interest image data by applying the image data to a region of interest machine learning model. In some embodiments, the region of interest image data is representative of one or more regions of interest in the image. In some embodiments, each of the one or more regions of interest are associated with at least one corresponding barcode of the one or more barcodes. In some embodiments, the computer program code, in execution with one or more processors, configures the computer program product for generating, by the one or more processors, decoded barcode data by applying the region of interest image data to a first decoder. In some embodiments, the first decoder comprises a region of interest fast linear decoder or a region of interest integrated decoder. In some embodiments, the computer program code, in execution with one or more processors, configures the computer program product for initiating, by the one or more processors, performance of one or more actions in based at least in part on the decoded barcode data

## BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.

FIG. 1 illustrates an example diagram of an environment in which embodiments of the present disclosure may operate;
FIG. 2 illustrates an example block diagram of an example apparatus that may be specially configured in accordance with an example embodiment of the present disclosure;
FIG. 3 illustrates an example apparatus in an accordance with an example embodiment of the present disclosure;
FIG. 4 illustrates an example image in accordance with one or more embodiments of the present disclosure;
FIG. 5 illustrates apparatus architecture in accordance with one or more embodiments of the present disclosure;
FIG. 6 illustrates an example interface in accordance with one or more embodiments of the present disclosure;
FIG. 7 illustrates a flowchart of an example method in accordance with one or more embodiments of the present disclosure;
FIG. 8 illustrates a flowchart of an example method in accordance with one or more embodiments of the present disclosure;
FIG. 9 illustrates a flowchart of an example method in accordance with one or more embodiments of the present disclosure;
FIG. 10 illustrates a flowchart of an example method in accordance with one or more embodiments of the present disclosure;
FIG. 11 illustrates a flowchart of an example method in accordance with one or more embodiments of the present disclosure;
FIG. 12 illustrates a flowchart of an example method in accordance with one or more embodiments of the present disclosure; and
FIG. 13 illustrates a flowchart of an example method in accordance with one or more embodiments of the present disclosure.

## DETAILED DESCRIPTION

Some embodiments of the present disclosure will now be described more fully herein with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

The use of the term "circuitry" as used herein with respect to components of a system, or an apparatus should be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry, communication circuitry, input/output circuitry, and the like. In some embodiments, other elements may provide or supplement the functionality of particular circuitry. Alternatively, or additionally, in some embodiments, other elements of a system and/or apparatus described herein may provide or supplement the functionality of another particular set of circuitry. For example, a processor may provide processing functionality to any of the sets of circuitry, a memory may provide storage functionality to any of the sets of circuitry, communications circuitry may provide network interface functionality to any of the sets of circuitry, and/or the like.

Overview

Example embodiments disclosed herein address technical problems associated with barcode decoder devices and associated methods. As would be understood by one skilled in the field to which this disclosure pertains, there are numerous example scenarios in which barcode decoder devices and associated methods are desirable.

In many applications, it may be desirable to use barcode decoder devices and associated methods are desirable. For example, in a warehouse setting it may be useful to keep track of inventory by using a barcode decoder device to identify objects that are leaving the warehouse. As another example, in a warehouse setting it may be useful to keep track of inventory by using a barcode decoder device to identify objects that are being moved within the warehouse. As another example, in a warehouse setting it may be useful to keep track of inventory by using a barcode decoder device to identify objects that are entering the warehouse.

Example solutions for barcode decoder devices and associated methods include using a barcode decoder device to capture images of barcodes and then decode the barcodes using a decoder. However, such example solutions are inefficient, technically deficient, and simplistic. For example, such example solutions are inefficient because such example solutions do not include multiple processing pathways specifically configured to decode barcodes associated with different barcode classification types. In this regard, for example, such example solutions do not include a fast linear decoding pathway for a first barcode classification type, an integrated decoding pathway for a second barcode classification type, and a machine learning pathway that can process both a first barcode classification type and/or a second barcode classification type. As another example, such example solutions are technically deficient because such example solutions are not able to decode barcodes within certain time limits, such as 5 milliseconds (e.g., because such example solutions do not use machine learning and parallel processing pathways). In this regard, for example, such example solutions are unable to decode barcodes within certain time limits because such example solutions do not use techniques such as parallel processing pathways, machine learning image processing using machine learning models that are associated with integer data types, initialization of machine learning models, and/or the like. As another example, such example solutions are simplistic because such example solutions do not include a plurality of preprocessing machine learning models to perform image processing techniques on generated region of interest data. Accordingly, there is a need for barcode decoder devices and associated methods that are able to perform barcode decoding in an efficient, technically sufficient, and sophisticated manner.

Thus, to address these and/or other issues related to such example solutions, example barcode decoder devices and associated methods are disclosed herein. For example, an embodiment in this disclosure, described in greater detail below, includes a method that includes identifying, by one or more processors, image data. In some embodiments, the image data is representative of an image comprising one or more barcodes. In some embodiments, the method includes generating, by a neural processing unit, region of interest image data by applying the image data to a region of interest machine learning model. In some embodiments, the region of interest image data is representative of one or more regions of interest in the image. In some embodiments, each of the one or more regions of interest are associated with at least one corresponding barcode of the one or more barcodes. In some embodiments, the method includes generating, by the one or more processors, decoded barcode data by applying the region of interest image data to a first decoder. In some embodiments, the first decoder comprises a region of interest fast linear decoder or a region of interest integrated decoder. In some embodiments, the method includes initiating, by the one or more processors, performance of one or more actions in based at least in part on the decoded barcode data. Accordingly, the barcode decoder devices and associated methods provided herein enable barcode decoding in an efficient, technically sufficient, and sophisticated manner.

Example Systems and Apparatuses

Embodiments of the present disclosure herein barcode decoder devices and associated methods. It should be readily appreciated that the embodiments of the barcode decoder devices and associated methods described herein may be configured in various additional and alternative manners in addition to those expressly described herein.

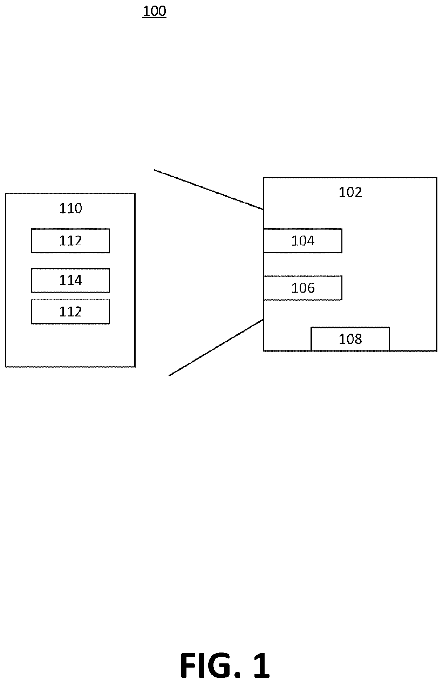

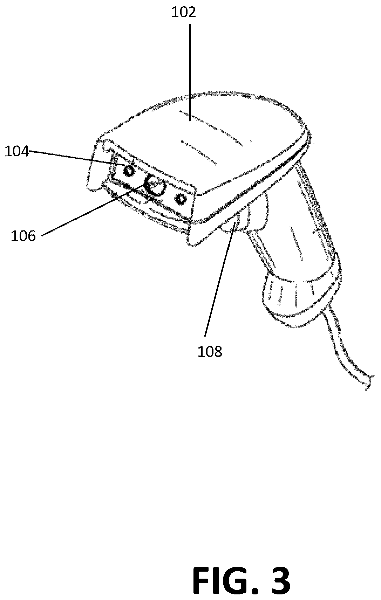

FIG. 1 illustrates an environment 100 in which embodiments of the present disclosure may operate. For example, the environment 100 may be a warehouse environment. In some embodiments, the environment 100 includes a barcode decoder device 102. In some embodiments, the barcode decoder device 102 may be any type of barcode decoder device. For example, the barcode decoder device 102 may be a handheld barcode decoder device, such as illustrated in FIG. 3.

In some embodiments, the barcode decoder device 102 includes a flash illumination source 104. In some embodiments, the barcode decoder device 102 includes an imaging lens 106. In some embodiments, the barcode decoder device 102 includes a manual trigger 108. In this regard, in some embodiments, the imaging lens 106, the flash illumination source 104, and/or the manual trigger 108 may be used to capture image data, identify optical character information, and/or decode barcodes by the barcode decoder device 102.

In some embodiments, the environment 100 includes an object 110. In some embodiments, the object 110 is any object that may be associated with a barcode. For example, in the context of a warehouse environment, the object may be a package. In some embodiments, the object includes one or more barcodes 112. Additionally, or alternatively, the object 110 is any object that may be associated with optical character information. In some embodiments, the object includes optical character information 114.

In some embodiments, the barcode decoder device 102 is associated with a determinable location. The determinable location of the barcode decoder device 102 in some embodiments represents an absolute position (e.g., GPS coordinates, latitude and longitude locations, a home location, and/or the like) or a relative position of the barcode decoder device 102 (e.g., an identifier representing the location of the barcode decoder device 102 as compared to one or more other barcode decoder devices, a home location (e.g., a location where the barcode decoder device 102 is stored), and/or general description in the world for example based at least in part on continent, state, ocean, or other definable region). In some embodiments, the barcode decoder device 102 includes or otherwise is associated with a location sensor and/or software-driven location services that provide the location data corresponding to the barcode decoder device 102. In other embodiments, the location of the barcode decoder device 102 is stored and/or otherwise determinable to one or more systems.

In some embodiments, the barcode decoder device 102 is electronically and/or communicatively coupled to one or more other devices, such as a display device, a cloud computing device (e.g., a server that provides content to and/or receives content from the barcode decoder device 102), a local computing device, and/or other barcode decoder devices. In some embodiments, the barcode decoder device 102 is located remotely from the one or more other devices and is electronically and/or communicatively coupled to the one or more other devices via a network. Additionally, or alternatively, the barcode decoder device 102 is located in proximity to the one or more other devices and is electronically and/or communicatively coupled to the one or more other devices via a network (e.g., a short-range network) and/or by one or more physical connections. In some embodiments, the barcode decoder device 102 is configured via hardware, software, firmware, and/or a combination thereof, to perform data intake of one or more types of data, such as image data, region of interest image data, decoded barcode data, and/or the like.

Additionally, or alternatively, in some embodiments, the barcode decoder device 102 is configured via hardware, software, firmware, and/or a combination thereof, to generate and/or transmit command(s) that control, adjust, or otherwise impact operations of one or more of the one or more other devices and/or one or more components of the barcode decoder device 102. Additionally, or alternatively, in some embodiments, the barcode decoder device 102 is configured via hardware, software, firmware, and/or a combination thereof, to perform data reporting, provide data, and/or other data output process(es) associated with monitoring or otherwise analyzing operations of the one or more other devices and/or one or more components of the barcode decoder device 102. For example, in various embodiments, the barcode decoder device 102 may be configured to execute and/or perform one or more operations and/or functions described herein.

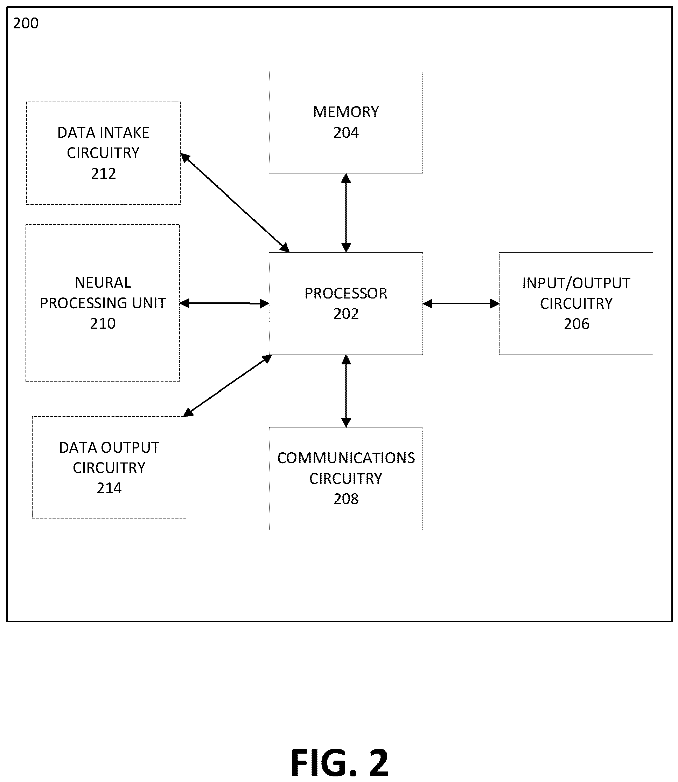

FIG. 2 illustrates an example block diagram of an example apparatus that may be specially configured in accordance with an example embodiment of the present disclosure. Specifically, FIG. 2 depicts an example computing apparatus 200 ("apparatus 200") specially configured in accordance with at least some example embodiments of the present disclosure. For example, the computing apparatus 200 may be embodied as one or more of a specifically configured personal computing apparatus, a specifically configured cloud-based computing apparatus, a specifically configured embedded computing device (e.g., configured for edge computing, and/or the like). Examples of an apparatus 200 may include, but is not limited to, the barcode decoder device 102. The apparatus 200 includes processor 202, memory 204, input/output circuitry 206, communications circuitry 208, and/or neural processing unit 210. In some embodiments, the apparatus 200 is configured to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitry both leverage use of the same processor(s), memory(ies), circuitry(ies), and/or the like to perform their associated functions such that duplicate hardware is not required for each set of circuitry.

In various embodiments, such as computing apparatus 200 of the barcode decoder device 102 may refer to, for example, one or more computers, computing entities, desktop computers, mobile phones, tablets, phablets, notebooks, laptops, distributed systems, servers, or the like, and/or any combination of devices or entities adapted to perform the functions, operations, and/or processes described herein. Such functions, operations, and/or processes may include, for example, transmitting, receiving, operating on, processing, displaying, storing, determining, creating/generating, monitoring, evaluating, comparing, and/or similar terms used herein. In one embodiment, these functions, operations, and/or processes can be performed on data, content, information, and/or similar terms used herein. In this regard, the apparatus 200 embodies a particular, specially configured computing entity transformed to enable the specific operations described herein and provide the specific advantages associated therewith, as described herein.

Processor 202 or processor circuity 202 may be embodied in a number of different ways. In various embodiments, the use of the terms "processor" should be understood to include a single core processor, a multi-core processor, multiple processors internal to the apparatus 200, and/or one or more remote or "cloud" processor(s) external to the apparatus 200. In some example embodiments, processor 202 may include one or more processing devices configured to perform independently. Alternatively, or additionally, processor 202 may include one or more processor(s) configured in tandem via a bus to enable independent execution of operations, instructions, pipelining, and/or multithreading.

In an example embodiment, the processor 202 may be configured to execute instructions stored in the memory 204 or otherwise accessible to the processor. Alternatively, or additionally, the processor 202 may be configured to execute hard-coded functionality. As such, whether configured by hardware or software methods, or by a combination thereof, processor 202 may represent an entity (e.g., physically embodied in circuitry) capable of performing operations according to embodiments of the present disclosure while configured accordingly. Alternatively, or additionally, processor 202 may be embodied as an executor of software instructions, and the instructions may specifically configure the processor 202 to perform the various algorithms embodied in one or more operations described herein when such instructions are executed. In some embodiments, the processor 202 includes hardware, software, firmware, and/or a combination thereof that performs one or more operations described herein.

In some embodiments, the processor 202 (and/or co-processor or any other processing circuitry assisting or otherwise associated with the processor) is/are in communication with the memory 204 via a bus for passing information among components of the apparatus 200.

Memory 204 or memory circuitry 204 may be non-transitory and may include, for example, one or more volatile and/or non-volatile memories. In some embodiments, the memory 204 includes or embodies an electronic storage device (e.g., a computer readable storage medium). In some embodiments, the memory 204 is configured to store information, data, content, applications, instructions, or the like, for enabling an apparatus 200 to carry out various operations and/or functions in accordance with example embodiments of the present disclosure.

Input/output circuitry 206 may be included in the apparatus 200. In some embodiments, input/output circuitry 206 may provide output to the user and/or receive input from a user. The input/output circuitry 206 may be in communication with the processor 202 to provide such functionality. The input/output circuitry 206 may comprise one or more user interface(s). In some embodiments, a user interface may include a display that comprises the interface(s) rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms. The processor 202 and/or input/output circuitry 206 comprising the processor may be configured to control one or more operations and/or functions of one or more user interface elements through computer program instructions (e.g., software and/or firmware) stored on a memory accessible to the processor (e.g., memory 204, and/or the like). In some embodiments, the input/output circuitry 206 includes or utilizes a user-facing application to provide input/output functionality to a computing device and/or other display associated with a user.

Communications circuitry 208 may be included in the apparatus 200. The communications circuitry 208 may include any means such as a device or circuitry embodied in either hardware or a combination of hardware and software that is configured to receive and/or transmit data from/to a network and/or any other device, circuitry, or module in communication with the apparatus 200. In some embodiments the communications circuitry 208 includes, for example, a network interface for enabling communications with a wired or wireless communications network. Additionally, or alternatively, the communications circuitry 208 may include one or more network interface card(s), antenna(s), bus(es), switch(es), router(s), modem(s), and supporting hardware, firmware, and/or software, or any other device suitable for enabling communications via one or more communications network(s). In some embodiments, the communications circuitry 208 may include circuitry for interacting with an antenna(s) and/or other hardware or software to cause transmission of signals via the antenna(s) and/or to handle receipt of signals received via the antenna(s). In some embodiments, the communications circuitry 208 enables transmission to and/or receipt of data from a user device, one or more sensors, and/or other external computing device(s) in communication with the apparatus 200.

Data intake circuitry 212 may be included in the apparatus 200. The data intake circuitry 212 may include hardware, software, firmware, and/or a combination thereof, designed and/or configured to capture, receive, request, and/or otherwise gather data associated with operations of the barcode decoder device 102. In some embodiments, the data intake circuitry 212 includes hardware, software, firmware, and/or a combination thereof, that communicates with one or more sensor(s) component(s), and/or the like within the barcode decoder device 102 to receive particular data associated with such operations of the barcode decoder device 102. Additionally, or alternatively, in some embodiments, the data intake circuitry 212 includes hardware, software, firmware, and/or a combination thereof, that retrieves particular data associated with the barcode decoder device 102 from one or more data repository/repositories accessible to the apparatus 200.

Neural processing unit 210 may be included in the apparatus 200. The neural processing unit 210 may include hardware, software, firmware, and/or a combination thereof designed and/or configured to request, receive, process, generate, and transmit data, data structures, control signals, and electronic information for training and executing a trained AI and machine learning model configured for facilitating the operations and/or functionalities described herein. For example, in some embodiments the neural processing unit 210 includes hardware, software, firmware, and/or a combination thereof, that identifies training data and/or utilizes such training data for training a particular machine learning model, AI, and/or other model to generate particular output data based at least in part on learnings from the training data. Additionally, or alternatively, in some embodiments, the neural processing unit 210 includes hardware, software, firmware, and/or a combination thereof, that embodies or retrieves a trained machine learning model, AI and/or other specially configured model utilized to process inputted data. Additionally, or alternatively, in some embodiments, the neural processing unit 210 includes hardware, software, firmware, and/or a combination thereof that processes received data utilizing one or more algorithm(s), function(s), subroutine(s), and/or the like, in one or more pre-processing and/or subsequent operations that need not utilize a machine learning or AI model.

Data output circuitry 214 may be included in the apparatus 200. The data output circuitry 214 may include hardware, software, firmware, and/or a combination thereof, that configures and/or generates an output based at least in part on data processed by the apparatus 200. In some embodiments, the data output circuitry 214 includes hardware, software, firmware, and/or a combination thereof, that generates a particular report based at least in part on the processed data, for example where the report is generated based at least in part on a particular reporting protocol. Additionally, or alternatively, in some embodiments, the data output circuitry 214 includes hardware, software, firmware, and/or a combination thereof, that configures a particular output data object, output data file, and/or user interface for storing, transmitting, and/or displaying. For example, in some embodiments, the data output circuitry 214 generates and/or specially configures a particular data output for transmission to another system sub-system for further processing. Additionally, or alternatively, in some embodiments, the data output circuitry 214 includes hardware, software, firmware, and/or a combination thereof, that causes rendering of a specially configured user interface based at least in part on data received by and/or processing by the apparatus 200.

In some embodiments, two or more of the sets of circuitries 202-214 are combinable. Alternatively, or additionally, one or more of the sets of circuitry 202-214 perform some or all of the operations and/or functionality described herein as being associated with another circuitry. In some embodiments, two or more of the sets of circuitry 202-214 are combined into a single module embodied in hardware, software, firmware, and/or a combination thereof. For example, in some embodiments, one or more of the sets of circuitry, for example the neural processing unit 210, may be combined with the processor 202, such that the processor 202 performs one or more of the operations described herein with respect to the neural processing unit 210.

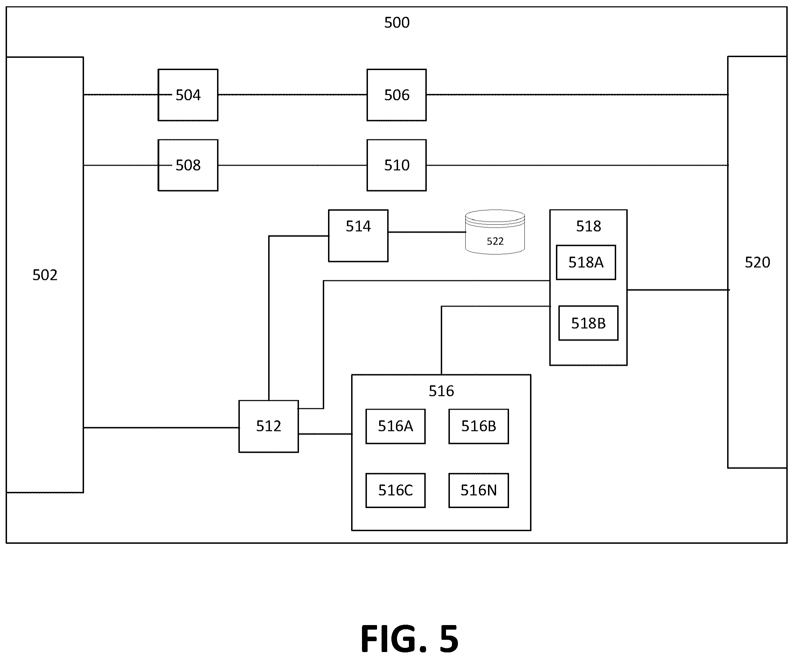

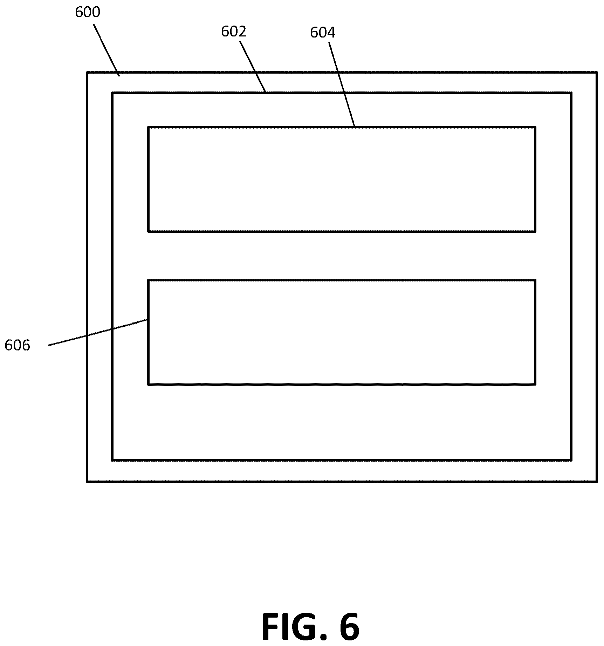

With reference to FIGS. 1-6, in some embodiments, each of the one or more barcodes 112 is a collection of machine-readable symbols that is representative of information associated with the object 110. In some embodiments, the one or more barcodes include one or more of a UPC barcode, a Code 128 barcode, a Code 39 barcode, an Interleaved 2 of 5 barcode, other 1-dimensional barcodes, a data matrix (DM) barcode, a quick response (QR) barcode, a postal barcode, other 2-dimensional barcodes, a 3-dimensional barcode, and/or the like. In some embodiments, the optical character information 114 includes typed, handwritten, and/or printed text or drawings.

In some embodiments, one or more of the one or more barcodes 112 are associated with a first barcode classification. For example, barcodes in the one or more barcodes 112 associated with the first barcode classification may include one or more of a UPC barcode, a Code 128 barcode, a Code 39 barcode, an Interleaved 2 of 5 barcode, other 1-dimensional barcodes, and/or the like. In some embodiments, barcodes in the one or more barcodes 112 that are associated with the first classification type may be barcodes that are configured to be decoded by a fast linear decoder 506. Additionally, or alternatively, barcodes in the one or more barcodes 112 that are associated with the first classification type may be barcodes that are configured to be decoded by a region of interest fast linear decoder 518A (e.g., the first decoder 518).

In some embodiments, one or more of the one or more barcodes 112 are associated with a second barcode classification. For example, barcodes in the one or more barcodes 112 associated with the second barcode classification may include one or more of a data matrix (DM) barcode, a quick response (QR) barcode, a postal barcode, other 2-dimensional barcodes, a 3-dimensional barcode, and/or the like. In some embodiments, barcodes in the one or more barcodes 112 that are associated with the second classification type may be barcodes that are configured to be decoded by an integrated decoder 510. Additionally, or alternatively, barcodes in the one or more barcodes 112 that are associated with the second classification type may be barcodes that are configured to be decoded by the region of interest integrated decoder 518B (e.g., the first decoder 518).

In some embodiments, the barcode decoder device 102 is configured to identify image data. For example, the barcode decoder device 102 may be configured to identify first image data and/or second image data (e.g., representative of a second image comprising one or more other barcodes and/or optical character information 114). In some embodiments, image data includes one or more items of data representative and/or indicative of an image 400 comprising the one or more barcodes 112 and/or the optical character information 114. In this regard, for example, image data may be representative and/or indicative of an image 400 of the object 110. As another example, image data may be representative and/or indicative of a partial image of the object 110. As another example, image data may be representative and/or indicative of an image 400 of at least one of the one or more barcodes 112 and/or the optical character information 114. As another example, image data may be representative and/or indicative of a partial image of at least one of the one or more barcodes 112 and/or the optical character information 114.

In some embodiments, identifying image data includes the barcode decoder device 102 being configured to receive image data from one or more other devices. For example, the barcode decoder device 102 may be configured to identify image data by receiving image data from one or more other devices that have captured the image data. In some embodiments, identifying image data includes the barcode decoder device 102 being configured to capture image data. For example, the barcode decoder device 102 may be configured to identify image data by capturing image data using an image data identification component 502. In some embodiments, the image data identification component 502 includes the imaging lens 106 and/or the flash illumination source 104. In some embodiments, identifying image data includes the barcode decoder device 102 being configured to generate image data. For example, the barcode decoder device 102 may be configured to generate image data based on other data related to image data. In some embodiments, the barcode decoder device 102 is configured to use the processor 202 to identify image data. In some embodiments, the barcode decoder device 102 is configured to capture image data in response to a user associated with the barcode decoder device 102 actuating the manual trigger 108 of the barcode decoder device 102.

In some embodiments, the barcode decoder device 102 is configured to identify one or more of the one or more barcodes 112 that are associated with the first barcode classification type. In this regard, for example, the barcode decoder device 102 may identify one or more of the one or more barcodes 112 that are associated with the first barcode declassification type. For example, the barcode decoder device 102 may be configured to identify a barcode of the one or more barcodes 112 that are associated with the first barcode classification type that identify the object 110. In some embodiments, the barcode decoder device 102 is configured to identify the optical character information 114.

In some embodiments, identifying one or more of the one or more barcodes 112 that are associated with the first barcode classification type includes the barcode decoder device 102 being configured to apply image data to a fast linear finder 504. In this regard, in some embodiments, the fast linear finder 504 is configured to process image data using one or more image processing techniques to identify one or more barcodes that are associated with the first barcode classification type in an image represented by the image data. In some embodiments, the barcode decoder device 102 is configured to use the processor 202 to identify one or more barcodes that are associated with the first barcode classification type in an image represented by the image data. In some embodiments, the barcode decoder device 102 is configured to identify one or more barcodes that are associated with the first barcode classification type in response to identifying image data.

In some embodiments, the barcode decoder device 102 is configured to generate decoded barcode data. In some embodiments, decoded barcode data includes one or more items of data representative of a decoded barcode. In this regard, for example, decoded barcode data may be representative of human readable information, non-machine-readable information, and/or alphanumeric information about the object 110. For example, the decoded barcode data may be representative of human readable information, non-machine-readable information, and/or alphanumeric information about the object 110 that corresponds to the machine-readable symbols that is representative of information associated with the object 110 (e.g., the machine-readable symbols represented by the one or more barcodes 112).

In some embodiments, the barcode decoder device 102 is configured to generate decoded barcode data by applying image data to the fast linear decoder 506. For example, the barcode decoder device 102 may configured to generate second decoded barcode data by applying second image data to the fast linear decoder 506. In some embodiments, the barcode decoder device 102 is configured to generate decoded barcode data by applying image data to the fast linear decoder 506 that corresponds to the first barcode classification type. Said differently, for example, the barcode decoder device 102 may be configured to apply image data to the fast linear decoder 506 to generate decoded barcode data for barcodes of the one or more barcodes 112 that are associated with the first barcode classification type. In some embodiments, the barcode decoder device 102 is configured to use the processor 202 to apply image data to the fast linear decoder 506. In some embodiments, the barcode decoder device 102 is configured to generate decoded barcode data by applying image data to the fast linear decoder 506 in response to the fast linear finder 504 identifying barcodes in the one or more barcodes 112 that are associated with the first barcode classification type.

In some embodiments, the barcode decoder device 102 is configured to identify one or more of the one or more barcodes 112 that are associated with the second barcode classification type. In this regard, for example, the barcode decoder device 102 may identify one or more of the one or more barcodes 112 that are associated with the second barcode classification type. For example, the barcode decoder device 102 may be configured to identify a barcode of the one or more barcodes 112 that are associated with the second barcode classification type that identify the object 110.

In some embodiments, identifying one or more of the one or more barcodes 112 that are associated with the second barcode classification type includes the barcode decoder device 102 being configured to apply image data to an integrated finder 508. In this regard, in some embodiments, the integrated finder 508 is configured to process image data using one or more image processing techniques to identify one or more barcodes that are associated with the second barcode classification type in an image represented by the image data. In some embodiments, the barcode decoder device 102 is configured to use the processor 202 to identify one or more barcodes that are associated with the second barcode classification type in an image represented by the image data. In some embodiments, the barcode decoder device 102 is configured to identify one or more barcodes that are associated with the second barcode classification type in response to identifying image data.

In some embodiments, the barcode decoder device 102 is configured to generate decoded barcode data by applying image data to the integrated decoder 510. For example, the barcode decoder device 102 may configured to generate second decoded barcode data by applying second image data to the integrated decoder 510. In some embodiments, the barcode decoder device 102 is configured to generate decoded barcode data by applying image data to the integrated decoder 510 that corresponds to the second barcode classification type. Said differently, for example, the barcode decoder device 102 may be configured to apply image data to the integrated decoder 510 to generate decoded barcode data for barcodes of the one or more barcodes 112 that are associated with the second barcode classification type. In some embodiments, the barcode decoder device 102 is configured to use the processor 202 to apply image data to the integrated decoder 510. In some embodiments, the barcode decoder device 102 is configured to generate decoded barcode data by applying image data to the integrated decoder 510 in response to the integrated finder 508 identifying barcodes in the one or more barcodes 112 that are associated with the second barcode classification type.

In some embodiments, the barcode decoder device 102 is configured to identify a region of interest machine learning model 512. In some embodiments, the region of interest machine learning model 512 is a data entity that describes parameters, hyper-parameters, and/or defined operations of a rules-based and/or machine learning model that is configured to generate region of interest image data. In this regard, in some embodiments, the region of interest machine learning model 512 is configured to utilize one or more of any type of machine learning, rules-based, and/or artificial intelligence techniques including one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like. In some embodiments, the region of interest machine learning model 512 is configured to be executed and/or implemented by the processor 202 and/or the neural processing unit 210.

In some embodiments, identifying the region of interest machine learning model 512 includes the barcode decoder device 102 being configured to receive the region of interest machine learning model 512 from one or more external computing devices. For example, the barcode decoder device 102 may be configured to receive the region of interest machine learning model 512 from a cloud computing device associated with the barcode decoder device 102. As another example, the barcode decoder device 102 may be configured to receive the region of interest machine learning model 512 from a local computing device associated with the barcode decoder device 102. As another example, the barcode decoder device 102 may be configured to receive the region of interest machine learning model 512 from another similar barcode decoder device associated with the barcode decoder device 102.

In some embodiments, identifying the region of interest machine learning model 512 includes the barcode decoder device 102 being configured to generate the region of interest machine learning model 512. In this regard, for example, the barcode decoder device 102 may be configured to receive machine learning model code and use the machine learning model code to generate the region of interest machine learning model 512. In some embodiments, the barcode decoder device 102 is configured to identify the region of interest machine learning model 512 using the processor 202 and/or the neural processing unit 210.

In some embodiments, the region of interest machine learning model 512 is associated with a floating-point data type (e.g., a floating-point data type being at least 32 bits). In this regard, in some embodiments, the region of interest machine learning model 512 is a data entity that includes data configured in a floating-point data type. Additionally, or alternatively, the region of interest machine learning model 512 is associated with an integer data type of a plurality of integer data types. In this regard, in some embodiments, the region of interest machine learning model 512 is a data entity that includes data configured in an integer data type. For example, the region of interest machine learning model 512 may be associated with a 16-bit integer data type. As another example, the region of interest machine learning model 512 may be associated with an 8-bit integer data type. As another example, the region of interest machine learning model 512 may be associated with a 4-bit integer data type. As another example, the region of interest machine learning model 512 may be associated with a 32-bit integer data type

In some embodiments, the barcode decoder device 102 is configured to convert the region of interest machine learning model 512 from a floating-point data type to an integer data type. For example, the barcode decoder device 102 may be configured to convert the region of interest machine learning model 512 from a floating-point data type to an 8-bit integer data type. In some embodiments, by converting the region of interest machine learning model 512 from a floating-point data type to an integer data type, the region of interest machine learning model is able to generate region of interest image data faster. In this regard, in some embodiments, the barcode decoder device 102 is configured to decode barcodes faster than if the region of interest machine learning model 512 was not converted from a floating-point data type to an integer data type. In some embodiments, the barcode decoder device 102 is configured to convert the region of interest machine learning model 512 from a floating-point data type to an integer data type using the processor 202 and/or the neural processing unit 210. In some embodiments, converting the region of interest machine learning model 512 from a floating-point data type to an integer data type is performed in accordance with a quantization technique.

In some embodiments, the barcode decoder device 102 is configured to initialize the region of interest machine learning model 512. In some embodiments, initializing the region of interest machine learning model 512 includes the barcode decoder device 102 loading the region of interest machine learning model 512 into memory 204 in a format that can be executed by the neural processing unit 210. In some embodiments, initialization of the region of interest machine learning model 512 includes generating and/or loading computational graph(s) as commands in memory 204 for execution by the neural processing unit 210. In some embodiments, once the region of interest machine learning model 512 is initialized, the region of interest machine learning model 512 may be configured to generate region of interest image data in response to the barcode decoder device 102 identifying image data. Said differently, initializing includes preloading the model so that the model can generate region of interest image data as soon as image data is identified by the barcode decoder device 102. In some embodiments, by initializing the region of interest machine learning model 512, the barcode decoder device 102 is configured to decode barcodes faster than if the region of interest machine learning model 512 was not initialized.

In some embodiments, the barcode decoder device 102 is configured to initialize the region of interest machine learning model 512 in response to receiving a start trigger. In some embodiments, a start trigger is a trigger that causes the barcode decoder device 102 to initialize the region of interest machine learning model 512. For example, a start trigger may be a trigger that is generated when the barcode decoder device is turned on (e.g., by a user associated with the barcode decoder device 102.

In some embodiments, the barcode decoder device 102 is configured to generate region of interest image data. In some embodiments, region of interest image data includes one or more items of data representative and/or indicative of one or more regions of interest 402 in the image 400 associated with image data. In this regard, in some embodiments, each region of interest in the one or more regions of interest 402 is associated with a corresponding barcode of the one or more barcodes 112. For example, a region of interest may be a portion of the image that includes a barcode in the one or more barcodes 112. Additionally, or alternatively, a region of interest may be a portion of the image that includes at least a portion of a barcode in the one or more barcodes 112. Said differently, for example, the one or more regions of interest 402 may be portions of an image 400 represented by image data that is relevant for decoding the one or more barcodes 112.

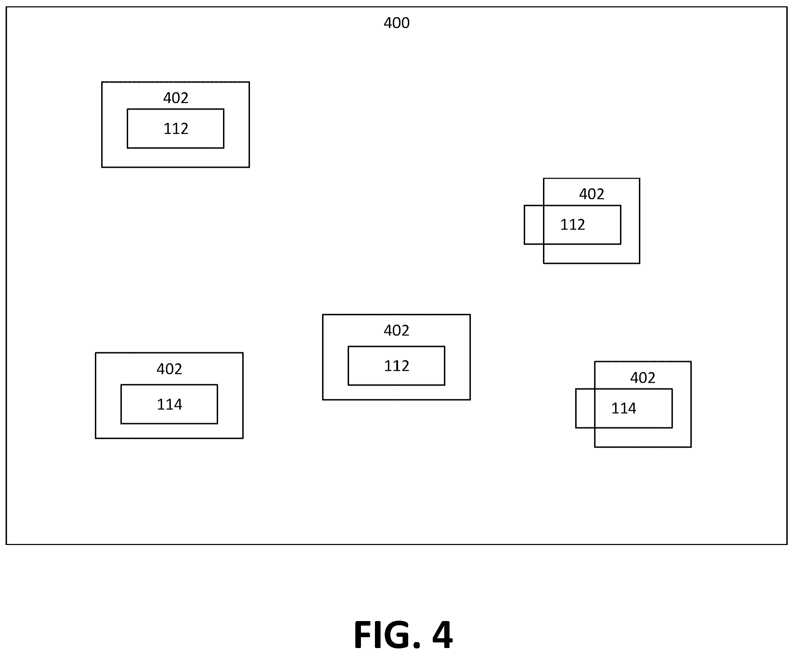

In some embodiments, each region of interest in the one or more regions of interest 402 is associated with optical character information 114. For example, a region of interest may be a portion of the image that includes optical character information 114. Additionally, or alternatively, a region of interest may be a portion of the image that includes at least a portion of optical character information 114. Said differently, for example, the one or more regions of interest 402 may be portions of an image 400 represented by image data that is relevant for identifying optical character information 114. In some embodiments, such as illustrated in FIG. 4, the one or more regions of interest 402 may include multiple regions of interest in a single image.

In some embodiments, in response to identifying optical character information 114, the barcode decoder device 102 is configured to output a data object associated with the optical character information 114. For example, the barcode decoder device 102 may be configured to display and/or transmit the data object associated with the optical character information 114. In this regard, in some embodiments, the barcode decoder device 102 is configured to convert the typed, handwritten, and/or printed text or drawings (e.g., the optical character information 114) into a digital format (e.g., the data object) based on region of interest image data.

In some embodiments, the barcode decoder device 102 is configured to generate region of interest image data by applying image data to the region of interest machine learning model 512. In this regard, in some embodiments, the region of interest machine learning model 512 is configured to process image data to identify the one or more regions of interest 402 in the image 400. For example, the region of interest machine learning model 512 may be configured identify the one or more regions of interest 402 in the image 400 by processing image data using one or more computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like. In some embodiments, the barcode decoder device 102 is configured to use the neural processing unit 210 and/or the processor 202 to apply image data to the region of interest machine learning model 512 to generate region of interest image data.

In some embodiments, the barcode decoder device 102 is configured to determine that the region of interest machine learning model 512 has failed to generate region of interest image data based on image data that the barcode decoder device 102 applied to the region of interest machine learning model 512. For example, the barcode decoder device 102 may configured to determine that the region of interest machine learning model 512 has failed to generate second region of interest image data based on second image data that the barcode decoder device 102 applied to the region of interest machine learning model 512. In some embodiments, the barcode decoder device 102 is configured to determine that the region of interest machine learning model 512 has failed to generate region of interest image data based on image data using the processor 202 and/or the neural processing unit 210.

In some embodiments, the barcode decoder device 102 is configured to determine that the region of interest machine learning model 512 has failed to generate region of interest image data when an image associated with image data includes at least one barcode and the region of interest machine learning model 512 does not identify any regions of interest in the image. For example, the barcode decoder device 102 may determine region of interest image data when the region of interest machine learning model 512 does not identify any of the one or more regions of interest 402 in the image 400. Additionally, or alternatively, the barcode decoder device 102 is configured to determine that the region of interest machine learning model 512 has failed to generate region of interest image data when the region of interest machine learning model 512 does not identify any regions of interest in an image associated with image data within a specified time limit. For example, the barcode decoder device 102 may be configured to determine that the region of interest machine learning model has failed to generate region of interest image data when the region of interest machine learning model 512 does not identify any of the one or more regions of interest 402 in the image 400 within a specified time limit.

In some embodiments, in response to determining that the region of interest machine learning model 512 has failed to generate region of interest image data, the barcode decoder is configured to generate decoded barcode data by applying image data to the fast linear decoder 506 and/or the integrated decoder 510. For example, in response to determining that the region of interest machine learning model 512 has failed to generate region of interest image data, the barcode decoder device 102 is configured to generate second decoded barcode data by applying second image data to the fast linear decoder 506 and/or the integrated decoder 510. Said differently, for example, in response to determining that the region of interest machine learning model 512 has failed to generate region of interest image data, the barcode decoder device 102 is configured to use alternative means, such as the fast linear decoder 506 and/or the integrated decoder 510, to decode one or more of the one or more barcodes 112.

In some embodiments, the barcode decoder device 102 is configured to determine that the region of interest machine learning model 512 does not meet a training threshold. In some embodiments, the barcode decoder device 102 is configured to determine that the region of interest machine learning model 512 does not meet a training threshold by determining that the region of interest machine learning model 512 was trained using data that was not generated within a particular time period. In this regard, for example, the barcode decoder device 102 may be configured to determine that the region of interest machine learning model 512 does not meet a training threshold by determining that the region of interest machine learning model 512 was trained using stale data such that that any region of interest image data generated by the region of interest machine learning model 512 may not meet an accuracy threshold.

In some embodiments, the barcode decoder device 102 is configured to determine that the region of interest machine learning model 512 does not meet a training threshold by determining that the region of interest machine learning model 512 was trained using an amount of data that is less than a data amount threshold. In this regard, for example, the barcode decoder device 102 may be configured to determine that the region of interest machine learning model 512 does not meet a training threshold by determining that an insufficient amount of data was used to train the region of interest machine learning model 512 such that that any region of interest image data generated by the region of interest machine learning model 512 may not meet an accuracy threshold.

In some embodiments, the barcode decoder device 102 is configured to determine that the region of interest machine learning model 512 does not meet a training threshold by determining that the region of interest machine learning model 512 has not been trained within a particular time period. In this regard, for example, the barcode decoder device 102 may be configured to determine that the region of interest machine learning model 512 does not meet a training threshold by determining that the region of interest machine learning model 512 has not been trained recently enough such that any region of interest image data generated by the region of interest machine learning model 512 may not meet an accuracy threshold. Said differently, for example, the barcode decoder device 102 may be configured to determine that the region of interest machine learning model 512 does not meet a training threshold by determining that the region of interest machine learning model 512 is not sufficiently accurate.

In some embodiments, in response to determining that the region of interest machine learning model 512 does not meet a training threshold, the barcode decoder device 102 is configured to generate decoded barcode data by applying image data to the fast linear decoder 506 and/or the integrated decoder 510. For example, in response to determining that the region of interest machine learning model 512 does not meet a training threshold, the barcode decoder device 102 is configured to generate second decoded barcode data by applying second image data to the fast linear decoder 506 and/or the integrated decoder 510. Said differently, for example, in response to determining that the region of interest machine learning model 512 does not meet a training threshold, the barcode decoder device 102 is configured to use alternative, such as the fast linear decoder 506 and/or the integrated decoder 510, to decode one or more of the one or more barcodes 112.

In some embodiments, the barcode decoder device 102 is configured to train the region of interest machine learning model 512. In some embodiments, the barcode decoder device 102 is configured to train the region of interest machine learning model 512 based at least in part on one or more of historical image data, historical region of interest image data, or historical decoded barcode data. In some embodiments, the barcode decoder device 102 is configured to train the region of interest machine learning model 512 before the barcode decoder device 102 has converted the region of interest machine learning model 512 from a floating-point data type to an integer data type. Additionally, or alternatively, the barcode decoder device 102 is configured to train the region of interest machine learning model 512 after the barcode decoder device 102 has converted the region of interest machine learning model 512 from a floating-point data type to an integer data type. Additionally, or alternatively, the barcode decoder device 102 is configured to train the region of interest machine learning model 512 before the barcode decoder device 102 has initialized the region of interest machine learning model 512.

In some embodiments, the barcode decoder device 102 is configured to retrain the region of interest machine learning model 512 (e.g., train the region of interest machine learning model 512 again after it has already been trained). For example, the barcode decoder device 102 may be configured to retrain the region of interest machine learning model periodically. As another example, the barcode decoder device 102 may be configured to retrain the region of interest machine learning model in response to the barcode decoder device 102 determining that the region of interest machine learning model 512 has failed to generate region of interest image data based on image data that was applied to the region of interest machine learning model 512. As another example, the barcode decoder device 102 may be configured to retrain the region of interest machine learning model in response to the barcode decoder device 102 determining that the region of interest machine learning model 512 does not meet a training threshold.

In some embodiments, the barcode decoder device 102 is configured to process region of interest image data. In some embodiments, the barcode decoder device 102 is configured to process region of interest image data using one or more of a plurality of preprocessing machine learning models 516. In this regard, in some embodiments the plurality of preprocessing machine learning models 516 may include any number of preprocessing machine learning models 516 each configured to perform a particular type of processing.

In some embodiments, each of the plurality of preprocessing machine learning models 516 is a data entity that describes parameters, hyper-parameters, and/or defined operations of a rules-based and/or machine learning model that is configured to process region of interest image data. In some embodiments, the barcode decoder device 102 is configured to process region of interest image data using one or more of a plurality of preprocessing machine learning models 516 using the neural processing unit 210. In some embodiments, a barcode device orchestrator component 514 of the barcode decoder device 102 is configured to facilitate processing of region of interest image data in the plurality of preprocessing machine learning models 516. For example, the barcode device orchestrator component 514 may be configured to determine that a first preprocessing machine learning model has finished processing region of interest image data and transmit region of interest image data to a second preprocessing machine learning model to be processed by the second preprocessing machine learning model.

In some embodiments, the plurality of preprocessing machine learning models 516 includes a light preprocessing machine learning model. In some embodiments, the light preprocessing machine learning model is configured to process region of interest image data by using one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like to alter the brightness of a region of interest of an image. For example, the light preprocessing machine learning model may be configured to process region of interest image data to increase or decrease the brightness of a region of interest of an image. In this regard, in some embodiments, the light preprocessing machine learning model may be configured to increase the speed at which the barcode decoder device 102 is able to process barcodes by increasing decoding speeds and/or preventing decoding errors (e.g., by altering a brightness to enable a barcode to be easier to process).

In some embodiments, the plurality of preprocessing machine learning models 516 includes a contrast preprocessing machine learning model. In some embodiments, the contrast preprocessing machine learning model is configured to process region of interest image data by using one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like to alter the contrast of a region of interest of an image. For example, the contrast preprocessing machine learning model may be configured to process region of interest image data to increase or decrease the contrast of a region of interest of an image. In this regard, in some embodiments, the contrast preprocessing machine learning model may be configured to increase the speed at which the barcode decoder device 102 is able to process barcodes by increasing decoding speeds and/or preventing decoding errors (e.g., by altering a contrast to enable a barcode to be easier to process).

In some embodiments, the plurality of preprocessing machine learning models 516 includes a resolution preprocessing machine learning model. In some embodiments, the resolution preprocessing machine learning model is configured to process region of interest image data by using one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like to alter the resolution of a region of interest of an image. For example, the resolution preprocessing machine learning model may be configured to process region of interest image data to increase or decrease the resolution of a region of interest of an image. In this regard, in some embodiments, the resolution preprocessing machine learning model may be configured to increase the speed at which the barcode decoder device 102 is able to process barcodes by increasing decoding speeds and/or preventing decoding errors (e.g., by altering a resolution to enable a barcode to be easier to process).

In some embodiments, the plurality of preprocessing machine learning models 516 includes a deblurring preprocessing machine learning model. In some embodiments, the deblurring preprocessing machine learning model is configured to process region of interest image data by using one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like to deblur a region of interest of an image. For example, the deblurring preprocessing machine learning model may be configured to process region of interest image data to deblur a region of interest of an image. In this regard, in some embodiments, the deblurring preprocessing machine learning model may be configured to increase the speed at which the barcode decoder device 102 is able to process barcodes by increasing decoding speeds and/or preventing decoding errors (e.g., by deblurring to enable a barcode to be easier to process).

In some embodiments, the barcode decoder device 102 is configured to adjust hardware system parameters of the barcode decoder device 102. In some embodiments, the barcode decoder device 102 is configured to adjust hardware system parameters of the barcode decoder device 102 based on region of interest image data. Additionally, or alternatively, the barcode decoder device 102 is configured to adjust hardware system parameters of the barcode decoder device 102 based on the processing of the region of interest image data in the plurality of preprocessing machine learning models 516. In this regard, for example, the barcode decoder device 102 may be configured to adjust hardware system parameters of the barcode decoder device 102 associated with sensor gain (e.g., sensors associated with capturing image data) based on region of interest image data and/or the processing of the region of interest image data in the plurality of preprocessing machine learning models 516 . As another example, the barcode decoder device 102 may be configured to adjust hardware system parameters of the barcode decoder device 102 associated with sensor exposure (e.g., sensors associated with capturing image data) based on region of interest image data and/or the processing of the region of interest image data in the plurality of preprocessing machine learning models 516.

In some embodiments, the barcode decoder device 102 is configured to generate one or more status flags associated with region of interest image data. In some embodiments, a status flag is a data object representative and/or indicative of information about region of interest image data (e.g., metadata) and/or the processing the barcode decoder device 102 has performed on the region of interest image data. In this regard, for example, a status flag may be a data object that is representative of a number of regions of interest in a particular image (e.g., the number of regions of interests in the one or more regions of interest 402). As another example, a status flag may be a data object that is representative of where each region of interest in an image is located (e.g., where each of the regions of interest in the one or more regions of interest 402 are located in the image 400). As another example, a status flag may be a data object that is representative of the types of barcodes in each region of interest of an image. As another example, a status flag may be a data object that is representative of which of the plurality of preprocessing machine learning models have been used to process region of interest image data. In some embodiments, the barcode decoder device 102 is configured to generate one or more status flags using the processor 202 and/or the neural processing unit 210.

In some embodiments, the barcode decoder device 102 is configured to store the one or more status flags. In some embodiments, the barcode decoder device 102 is configured to store the one or more status flags in a barcode decoder device database 522. In some embodiments, by generating and storing one or more status flags, the barcode decoder device 102 may be able to access information related to the one or more barcodes 112 without having to refer to an entire image identified by the barcode decoder device 102. In this regard, for example, the storage requirements of the barcode decoder device 102 may be reduced and/or the decoding speed of the barcode decoder device 102 may be increased. In some embodiments, the barcode device orchestrator component 514 of the barcode decoder device 102 is configured to generate the one or more status flags and/or transmit the one or more status flags to the barcode decoder device database 522.

In some embodiments, the barcode decoder device 102 is configured to generate decoded barcode data by applying region of interest image data to the region of interest fast linear decoder 518A (e.g., the first decoder 518). In some embodiments, the barcode decoder device 102 is configured to generate decoded barcode data by applying region of interest image data to the region of interest fast linear decoder 518A that corresponds to the first barcode classification type. Said differently, for example, the barcode decoder device 102 may be configured to apply region of interest image data to the region of interest fast linear decoder 518A to generate decoded barcode data for barcodes of the one or more barcodes 112 that are associated with the first barcode classification type. In some embodiments, the barcode decoder device 102 is configured to use the processor 202 to apply region of interest image data to the region of interest fast linear decoder 518A. In some embodiments, the barcode decoder device 102 is configured to generate decoded barcode data by applying region of interest image data to the region of interest fast linear decoder 518A in response to the region of interest machine learning model 512 generating region of interest image data that includes barcodes in the one or more barcodes 112 that are associated with the first barcode classification type. Additionally, or alternatively, the barcode decoder device 102 is configured to generate decoded barcode data by applying region of interest image data to the region of interest fast linear decoder 518A in response to one or more of the plurality of preprocessing machine learning models 516 processing region of interest image data that that includes barcodes in the one or more barcodes 112 that are associated with the first barcode classification type.

In some embodiments, the barcode decoder device 102 is configured to generate decoded barcode data by applying region of interest image data to the region of interest integrated decoder 518B (e.g., the first decoder 518). In some embodiments, the barcode decoder device 102 is configured to generate decoded barcode data by applying region of interest image data to the region of interest integrated decoder 518B that corresponds to the second classification type. Said differently, for example, the barcode decoder device 102 may be configured to apply region of interest image data to the region of interest integrated decoder 518B to generate decoded barcode data for barcodes of the one or more barcodes 112 that are associated with the second classification type. In some embodiments, the barcode decoder device 102 is configured to use the processor 202 to apply region of interest image data to the region of interest integrated decoder 518B. In some embodiments, the barcode decoder device 102 is configured to generate decoded barcode data by applying region of interest image data to the region of interest integrated decoder 518B in response to the region of interest machine learning model 512 generating region of interest image data that includes barcodes in the one or more barcodes 112 that are associated with the second classification type. Additionally, or alternatively, the barcode decoder device 102 is configured to generate decoded barcode data by applying region of interest image data to the region of interest integrated decoder 518B in response to one or more of the plurality of preprocessing machine learning models 516 processing region of interest image data that that includes barcodes in the one or more barcodes 112 that are associated with the second classification type.

In some embodiments, some embodiments, the barcode decoder device 102 is configured to determining a number of regions in the one or more regions of interest 402. In this regard, for example, the barcode decoder device 102 may be configured to determine the number of regions of interest in an image. For example, the barcode decoder device 102 may be configured to determine that there are three regions of interest in the one or more regions of interest 402 of the image 400. In some embodiments, the barcode decoder device 102 is configured to determine the number of pixels in each region of interest in the one or more regions of interest 402. For example, the barcode decoder device 102 may be configured to determine the number of pixels in each of the three regions of interest in the one or more regions of interest 402 of the image 400 (e.g., the size of each region of interest by the number of pixels). In some embodiments, the barcode decoder device 102 is configured to generate a region of interest timeout parameter. In some embodiments, the barcode decoder device 102 is configured to generate a region of interest timeout parameter based on the number of regions of interest and the number of pixels in each region of interest. In this regard, for example, the barcode decoder device 102 may be configured to generate a region of interest timeout parameter using equation (1):

$$(1) \; region \; of \; interest \; timeout \; parameter = \sum_{0}^{n} (Tc * A * Troi) + Tbase$$

wherein n is the number of regions of interest in an image, Tc is the amount of time per pixel (e.g., one hundred nanoseconds, A is the number of pixels in each region of interest (e.g., the area), Troi is the region of interest process time (e.g., the amount of time to process a region of interest), and Tbase is a base timeout time.

In some embodiments, the barcode decoder device 102 is configured to determine that the region of interest timeout parameter has been exceeded. In some embodiments, the barcode decoder device 102 is configured to determine that the region of interest timeout parameter has been exceeded when the barcode decoder device 102 has applied region of interest image data to the first decoder 518 and the first decoder 518 has not decoded one or more barcodes associated with the region of interest image data within a particular amount of time.

In some embodiments, the barcode decoder device 102 is configured to cause the first decoder to terminate in response to the determination that the region of interest timeout parameter has been exceeded. In this regard, in some embodiments, a region of interest timeout parameter is representative of an amount of time that the barcode decoder device 102 allows the first decoder 518 to have to decode a barcode associated with the region of interest image data before the barcode decoder device 102 causes the first decoder 518 to terminate execution. In some embodiments, the region of interest timeout parameter is a dynamic parameter in that it is adjusted based on the number of regions of interest that are associated with region of interest image data and/or the number of pixels in each region of interest (e.g., the size of each region of interest). In this regard, the barcode decoder device 102 is able to increase barcode decoding speed by ensuring that the first decoder does not spend excessive time decoding a barcode while maintaining a high level of accuracy of barcode decoding by ensuring that the first decoder 518 is not terminated too soon. For example, if the barcode decoder device 102 determines that the region of interest timeout parameter has been exceeded, the barcode decoder device 102 may be configured to apply other region of interest image data to the first decoder 518 to decode a barcode, which increases decoding speeds as the barcode decoder device 102 does not waste time trying to decode a barcode that might not be possible for the barcode decoder device 102 to decode (e.g., because the image of the barcode is not clear).

In some embodiments, the barcode decoder device 102 is configured to initiate performance of one or more actions. In some embodiments, the barcode decoder device 102 is configured to initiate performance of one or more actions based at least in part on decoded barcode data and/or decoded optical character information data. In this regard, in some embodiments, initiating performance of one or more actions includes the barcode decoder device 102 being configured to output an audible alert. For example, the barcode decoder device 102 may be configured to output a first audible alert when a barcode in the one or more barcodes 112 is successfully decoded. As another example, the barcode decoder device 102 may be configured to output a second audible alert when a barcode in the one or more barcodes is not successfully decoded. For example, the barcode decoder device 102 may be configured to output the second audible alert when the barcode decoder device 102 determines that the region of interest timeout parameter has been exceeded. In some embodiments, an audible alert may be outputted via the output component 320 of the barcode decoder device 102. In this regard, for example, the output component 320 may be a microphone.

In some embodiments, initiating performance of one or more actions includes the barcode decoder device being configured to image data. For example, the barcode decoder device 102 may be configured to capture second image data. In this regard, in some embodiments, the barcode decoder device 102 is configured to automatically capture new image data in response to generating decoded barcode data without interaction with the barcode decoder device 102 by a user associated with the barcode decoder device 102.

In some embodiments, initiating performance of one or more actions includes the barcode decoder device 102 being configured to generate a decoded barcode interface component 602. In some embodiments, the decoded barcode interface component 602 includes one or more decoded barcode interface elements 604. In some embodiments, the one or more decoded barcode interface elements 604 are configured to display decoded barcode data. In this regard, for example, the one or more decoded barcode interface elements 604 may be configured to display a decoded barcode that was determined by the barcode decoder device. In some embodiments, the decoded barcode interface component 602 includes one or more action interface elements 608. In some embodiments, the one or more action interface elements 608 are configured to be selected to cause the barcode decoder device 102 to perform an action. For example, the one or more action interface elements 608 may be selected to cause the barcode decoder device 102 to capture image data.

In some embodiments, initiating performance of one or more actions includes the barcode decoder device 102 being configured to cause the decoded barcode interface component 602 to be rendered to an operations interface 600. In some embodiments, the operations interface 600 may be provided by the output component 520 of the barcode decoder device 102. In this regard, for example, the output component 520 may be a display panel.

In some embodiments, initiating performance of one or more actions includes the barcode decoder device 102 being configured to transmit decoded barcode data to an external computing device. For example, the barcode decoder device 102 may be configured to transmit decoded barcode data to an external computing device that includes an inventory management system. As another example, the barcode decoder device 102 may be configured to transmit decoded barcode data to an external computing device that is another barcode decoding system.

<u>Example Methods</u>

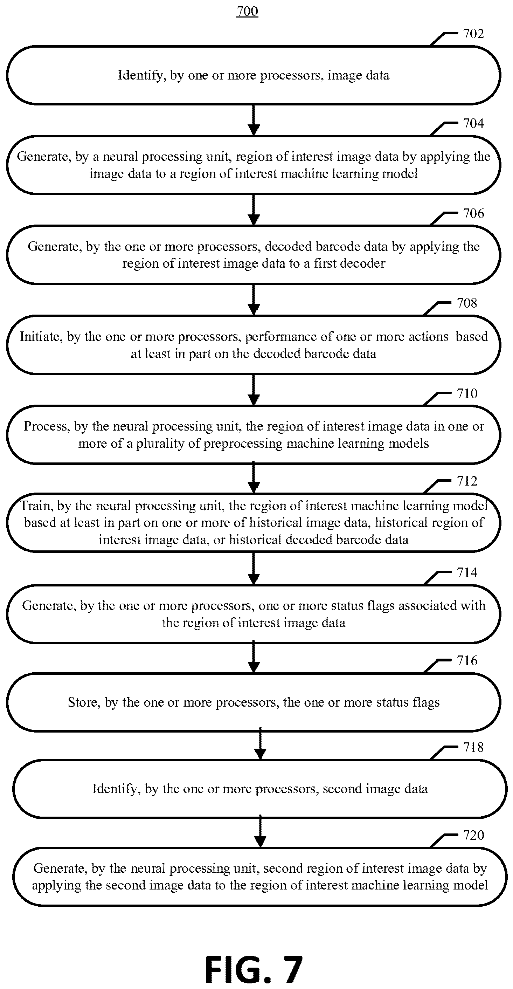

Referring now to FIG. 7, a flowchart providing an example method 700 is illustrated. In this regard, FIG. 7 illustrates operations that may be performed by barcode decoder device 102 and/or one or more components of the barcode decoder device 102. In some embodiments, the example method 700 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 700.

As shown in block 702, the method 700 may include identifying, by one or more processors, image data. As described above, in some embodiments, image data includes one or more items of data representative and/or indicative of an image 400 comprising the one or more barcodes 112 and/or optical character information 114. In this regard, for example, image data may be representative and/or indicative of an image 400 of the object 110. As another example, image data may be representative and/or indicative of a partial image of the object 110. As another example, image data may be representative and/or indicative of an image 400 of at least one of the one or more barcodes 112 and/or optical character information 114. As another example, image data may be representative and/or indicative of a partial image of at least one of the one or more barcodes 112 and/or optical character information 114.

In some embodiments, identifying image data includes the barcode decoder device 102 being configured to receive image data from one or more other devices. For example, the barcode decoder device 102 may be configured to identify image data by receiving image data from one or more other devices that have captured the image data. In some embodiments, identifying image data includes the barcode decoder device 102 being configured to capture image data. For example, the barcode decoder device 102 may be configured to identify image data by capturing image data using an image data identification component 502. In some embodiments, the image data identification component 502 includes the imaging lens 106 and/or the flash illumination source 104. In some embodiments, identifying image data includes the barcode decoder device 102 being configured to generate image data. For example, the barcode decoder device 102 may be configured to generate image data based on other data related to image data. In some embodiments, the barcode decoder device 102 is configured to use the processor 202 to identify image data. In some embodiments, the barcode decoder device 102 is configured to capture image data in response to a user associated with the barcode decoder device 102 actuating the manual trigger 108 of the barcode decoder device 102.

As shown in block 704, the method 700 may include generating, by a neural processing unit, region of interest image data by applying the image data to a region of interest machine learning model. As described above, in some embodiments, region of interest image data includes one or more items of data representative and/or indicative of one or more regions of interest 402 in the image 400 associated with image data. In this regard, in some embodiments, each region of interest in the one or more regions of interest 402 is associated with a corresponding barcode of the one or more barcodes 112. For example, a region of interest may be a portion of the image that includes a barcode in the one or more barcodes 112. Additionally, or alternatively, a region of interest may be a portion of the image that includes at least a portion of a barcode in the one or more barcodes 112. Said differently, for example, the one or more regions of interest 402 may be portions of an image 400 represented by image data that is relevant for decoding the one or more barcodes 112.

In some embodiments, each region of interest in the one or more regions of interest 402 is associated with optical character information 114. For example, a region of interest may be a portion of the image that includes optical character information 114. Additionally, or alternatively, a region of interest may be a portion of the image that includes at least a portion of optical character information 114. Said differently, for example, the one or more regions of interest 402 may be portions of an image 400 represented by image data that is relevant for identifying optical character information 114. In some embodiments, such as illustrated in FIG. 4, the one or more regions of interest 402 may include multiple regions of interest in a single image.

In some embodiments, in response to identifying optical character information 114, the barcode decoder device 102 is configured to output a data object associated with the optical character information 114. For example, the barcode decoder device 102 may be configured to display and/or transmit the data object associated with the optical character information 114. In this regard, in some embodiments, the barcode decoder device 102 is configured to convert the typed, handwritten, and/or printed text or drawings (e.g., the optical character information 114) into a digital format (e.g., the data object) based on region of interest image data.

In some embodiments, the barcode decoder device 102 is configured to generate region of interest image data by applying image data to the region of interest machine learning model 512. In this regard, in some embodiments, the region of interest machine learning model 512 is configured to process image data to identify the one or more regions of interest 402 in the image 400. For example, the region of interest machine learning model 512 may be configured identify the one or more regions of interest 402 in the image 400 by processing image data using one or more computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like. In some embodiments, the barcode decoder device 102 is configured to use the neural processing unit 210 and/or the processor 202 to apply image data to the region of interest machine learning model 512 to generate region of interest image data.

As shown in block 706, the method 700 may include generating, by the one or more processors, decoded barcode data by applying the region of interest image data to a first decoder. As described above, in some embodiments, decoded barcode data includes one or more items of data representative of a decoded barcode. In this regard, for example, decoded barcode data may be representative of human readable information, non-machine-readable information, and/or alphanumeric information about the object 110. For example, the decoded barcode data may be representative of human readable information, non-machine-readable information, and/or alphanumeric information about the object 110 that corresponds to the machine-readable symbols that is representative of information associated with the object 110 (e.g., the machine-readable symbols represented by the one or more barcodes 112).

In some embodiments, the barcode decoder device 102 is configured to generate decoded barcode data by applying region of interest image data to the region of interest fast linear decoder 518A that corresponds to the first barcode classification type. Said differently, for example, the barcode decoder device 102 may be configured to apply region of interest image data to the region of interest fast linear decoder 518A to generate decoded barcode data for barcodes of the one or more barcodes 112 that are associated with the first barcode classification type. In some embodiments, the barcode decoder device 102 is configured to use the processor 202 to apply region of interest image data to the region of interest fast linear decoder 518A. In some embodiments, the barcode decoder device 102 is configured to generate decoded barcode data by applying region of interest image data to the region of interest fast linear decoder 518A in response to the region of interest machine learning model 512 generating region of interest image data that includes barcodes in the one or more barcodes 112 that are associated with the first barcode classification type. Additionally, or alternatively, the barcode decoder device 102 is configured to generate decoded barcode data by applying region of interest image data to the region of interest fast linear decoder 518A in response to one or more of the plurality of preprocessing machine learning models 516 processing region of interest image data that that includes barcodes in the one or more barcodes 112 that are associated with the first barcode classification type.

In some embodiments, the barcode decoder device 102 is configured to generate decoded barcode data by applying region of interest image data to the region of interest integrated decoder 518B (e.g., the first decoder 518). In some embodiments, the barcode decoder device 102 is configured to generate decoded barcode data by applying region of interest image data to the region of interest integrated decoder 518B that corresponds to the second classification type. Said differently, for example, the barcode decoder device 102 may be configured to apply region of interest image data to the region of interest integrated decoder 518B to generate decoded barcode data for barcodes of the one or more barcodes 112 that are associated with the second classification type. In some embodiments, the barcode decoder device 102 is configured to use the processor 202 to apply region of interest image data to the region of interest integrated decoder 518B. In some embodiments, the barcode decoder device 102 is configured to generate decoded barcode data by applying region of interest image data to the region of interest integrated decoder 518B in response to the region of interest machine learning model 512 generating region of interest image data that includes barcodes in the one or more barcodes 112 that are associated with the second classification type. Additionally, or alternatively, the barcode decoder device 102 is configured to generate decoded barcode data by applying region of interest image data to the region of interest integrated decoder 518B in response to one or more of the plurality of preprocessing machine learning models 516 processing region of interest image data that that includes barcodes in the one or more barcodes 112 that are associated with the second classification type.

As shown in block 708, the method 700 may include initiating, by the one or more processors, performance of one or more actions based at least in part on the decoded barcode data. As described above, in some embodiments, the barcode decoder device 102 is configured to initiate performance of one or more actions in response to generating decoded barcode data.

As shown in block 710, the method 700 may include processing, by the neural processing unit, the region of interest image data in one or more of a plurality of preprocessing machine learning models. As described above, in some embodiments, the plurality of preprocessing machine learning models 516 may include any number of preprocessing machine learning models 516 each configured to perform a particular type of processing.

In some embodiments, each of the plurality of preprocessing machine learning models 516 is a data entity that describes parameters, hyper-parameters, and/or defined operations of a rules-based and/or machine learning model that is configured to process region of interest image data. In some embodiments, the barcode decoder device 102 is configured to process region of interest image data using one or more of a plurality of preprocessing machine learning models 516 using the neural processing unit 210. In some embodiments, a barcode device orchestrator component 514 of the barcode decoder device 102 is configured to facilitate processing of region of interest image data in the plurality of preprocessing machine learning models 516. For example, the barcode device orchestrator component 514 may be configured to determine that a first preprocessing machine learning model has finished processing region of interest image data and transmit region of interest image data to a second preprocessing machine learning model to be processed by the second preprocessing machine learning model.

In some embodiments, the plurality of preprocessing machine learning models 516 includes a light preprocessing machine learning model. In some embodiments, the light preprocessing machine learning model is configured to process region of interest image data by using one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like to alter the brightness of a region of interest of an image. For example, the light preprocessing machine learning model may be configured to process region of interest image data to increase or decrease the brightness of a region of interest of an image. In this regard, in some embodiments, the light preprocessing machine learning model may be configured to increase the speed at which the barcode decoder device 102 is able to process barcodes by increasing decoding speeds and/or preventing decoding errors (e.g., by altering a brightness to enable a barcode to be easier to process).

In some embodiments, the plurality of preprocessing machine learning models 516 includes a contrast preprocessing machine learning model. In some embodiments, the contrast preprocessing machine learning model is configured to process region of interest image data by using one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like to alter the contrast of a region of interest of an image. For example, the contrast preprocessing machine learning model may be configured to process region of interest image data to increase or decrease the contrast of a region of interest of an image. In this regard, in some embodiments, the contrast preprocessing machine learning model may be configured to increase the speed at which the barcode decoder device 102 is able to process barcodes by increasing decoding speeds and/or preventing decoding errors (e.g., by altering a contrast to enable a barcode to be easier to process).

In some embodiments, the plurality of preprocessing machine learning models 516 includes a resolution preprocessing machine learning model. In some embodiments, the resolution preprocessing machine learning model is configured to process region of interest image data by using one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like to alter the resolution of a region of interest of an image. For example, the resolution preprocessing machine learning model may be configured to process region of interest image data to increase or decrease the resolution of a region of interest of an image. In this regard, in some embodiments, the resolution preprocessing machine learning model may be configured to increase the speed at which the barcode decoder device 102 is able to process barcodes by increasing decoding speeds and/or preventing decoding errors (e.g., by altering a resolution to enable a barcode to be easier to process).

In some embodiments, the plurality of preprocessing machine learning models 516 includes a deblurring preprocessing machine learning model. In some embodiments, the deblurring preprocessing machine learning model is configured to process region of interest image data by using one or more of computer vision techniques, supervised learning (e.g., using user feedback), unsupervised learning, semi-supervised learning, reinforcement learning, computer vision techniques, sequence modeling techniques, language processing techniques, neural network techniques, generative artificial intelligence techniques, filtration techniques, grouping techniques, sorting techniques, trend techniques, correlation techniques, anomaly detection techniques, clustering techniques, and/or the like to deblur a region of interest of an image. For example, the deblurring preprocessing machine learning model may be configured to process region of interest image data to deblur a region of interest of an image. In this regard, in some embodiments, the deblurring preprocessing machine learning model may be configured to increase the speed at which the barcode decoder device 102 is able to process barcodes by increasing decoding speeds and/or preventing decoding errors (e.g., by deblurring to enable a barcode to be easier to process).

In some embodiments, the barcode decoder device 102 is configured to adjust hardware system parameters of the barcode decoder device 102. In some embodiments, the barcode decoder device 102 is configured to adjust hardware system parameters of the barcode decoder device 102 based on region of interest image data. Additionally, or alternatively, the barcode decoder device 102 is configured to adjust hardware system parameters of the barcode decoder device 102 based on the processing of the region of interest image data in the plurality of preprocessing machine learning models 516. In this regard, for example, the barcode decoder device 102 may be configured to adjust hardware system parameters of the barcode decoder device 102 associated with sensor gain (e.g., sensors associated with capturing image data) based on region of interest image data and/or the processing of the region of interest image data in the plurality of preprocessing machine learning models 516 . As another example, the barcode decoder device 102 may be configured to adjust hardware system parameters of the barcode decoder device 102 associated with sensor exposure (e.g., sensors associated with capturing image data) based on region of interest image data and/or the processing of the region of interest image data in the plurality of preprocessing machine learning models 516.

As shown in block 712, the method 700 may include training, by the neural processing unit, the region of interest machine learning model based at least in part on one or more of historical image data, historical region of interest image data, or historical decoded barcode data. As described above, in some embodiments, the barcode decoder device 102 is configured to train the region of interest machine learning model 512 before the barcode decoder device 102 has converted the region of interest machine learning model 512 from a floating-point data type to an integer data type. Additionally, or alternatively, the barcode decoder device 102 is configured to train the region of interest machine learning model 512 after the barcode decoder device 102 has converted the region of interest machine learning model 512 from a floating-point data type to an integer data type. Additionally, or alternatively, the barcode decoder device 102 is configured to train the region of interest machine learning model 512 before the barcode decoder device 102 has initialized the region of interest machine learning model 512.

In some embodiments, the barcode decoder device 102 is configured to retrain the region of interest machine learning model 512 (e.g., train the region of interest machine learning model 512 again after it has already been trained). For example, the barcode decoder device 102 may be configured to retrain the region of interest machine learning model periodically. As another example, the barcode decoder device 102 may be configured to retrain the region of interest machine learning model in response to the barcode decoder device 102 determining that the region of interest machine learning model 512 has failed to generate region of interest image data based on image data that was applied to the region of interest machine learning model 512. As another example, the barcode decoder device 102 may be configured to retrain the region of interest machine learning model in response to the barcode decoder device 102 determining that the region of interest machine learning model 512 does not meet a training threshold.

As shown in block 714, the method 700 may include generating, by the one or more processors, one or more status flags associated with the region of interest image data. As described above, in some embodiments, a status flag is a data object representative and/or indicative of information about region of interest image data (e.g., metadata) and/or the processing the barcode decoder device 102 has performed on the region of interest image data. In this regard, for example, a status flag may be a data object that is representative of a number of regions of interest in a particular image (e.g., the number of regions of interests in the one or more regions of interest 402). As another example, a status flag may be a data object that is representative of where each region of interest in an image is located (e.g., where each of the regions of interest in the one or more regions of interest 402 are located in the image 400). As another example, a status flag may be a data object that is representative of the types of barcodes in each region of interest of an image. As another example, a status flag may be a data object that is representative of which of the plurality of preprocessing machine learning models have been used to process region of interest image data. In some embodiments, the barcode decoder device 102 is configured to generate one or more status flags using the processor 202 and/or the neural processing unit 210.

As shown in block 716, the method 700 may include storing, by the one or more processors, the one or more status flags. As described above, in some embodiments, the barcode decoder device 102 is configured to store the one or more status flags in a barcode decoder device database 522. In some embodiments, by generating and storing one or more status flags, the barcode decoder device 102 may be able to access information related to the one or more barcodes 112 without having to refer to an entire image identified by the barcode decoder device 102. In this regard, for example, the storage requirements of the barcode decoder device 102 may be reduced and/or the decoding speed of the barcode decoder device 102 may be increased. In some embodiments, the barcode device orchestrator component 514 of the barcode decoder device 102 is configured to generate the one or more status flags and/or transmit the one or more status flags to the barcode decoder device database 522.

As shown in block 718, the method 700 may include identifying, by the one or more processors, second image data. In some embodiments, the second image data is representative of a second image comprising optical character information.

As shown in block 720, the method 700 may include generating, by the neural processing unit, second region of interest image data by applying the second image data to the region of interest machine learning model. In some embodiments, the second region of interest image data is representative of one or more second regions of interest in the image, wherein each of the one or more second regions of interest are associated with the optical character information.

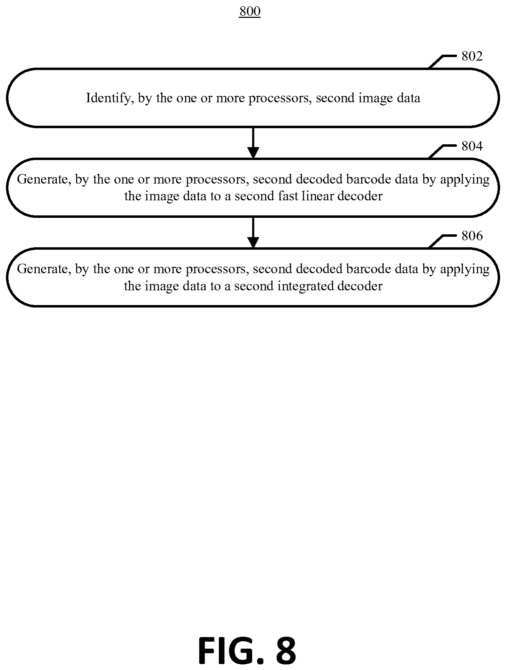

Referring now to FIG. 8, a flowchart providing an example method 800 is illustrated. In this regard, FIG. 8 illustrates operations that may be performed by barcode decoder device 102 and/or one or more components of the barcode decoder device 102. In some embodiments, the example method 800 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 800.

As shown in block 802, the method 800 may include identifying, by the one or more processors, second image data, wherein the second image data is representative of a second image comprising one or more other barcodes. As described above, in some embodiments, image data includes one or more items of data representative and/or indicative of an image 400 comprising the one or more barcodes 112 and/or optical character information 114. In this regard, for example, image data may be representative and/or indicative of an image 400 of the object 110. As another example, image data may be representative and/or indicative of a partial image of the object 110. As another example, image data may be representative and/or indicative of an image 400 of at least one of the one or more barcodes 112 and/or optical character information 114. As another example, image data may be representative and/or indicative of a partial image of at least one of the one or more barcodes 112 and/or optical character information 114.

In some embodiments, identifying image data includes the barcode decoder device 102 being configured to receive image data from one or more other devices. For example, the barcode decoder device 102 may be configured to identify image data by receiving image data from one or more other devices that have captured the image data. In some embodiments, identifying image data includes the barcode decoder device 102 being configured to capture image data. For example, the barcode decoder device 102 may be configured to identify image data by capturing image data using an image data identification component 502. In some embodiments, the image data identification component 502 includes the imaging lens 106 and/or the flash illumination source 104. In some embodiments, identifying image data includes the barcode decoder device 102 being configured to generate image data. For example, the barcode decoder device 102 may be configured to generate image data based on other data related to image data. In some embodiments, the barcode decoder device 102 is configured to use the processor 202 to identify image data. In some embodiments, the barcode decoder device 102 is configured to capture image data in response to a user associated with the barcode decoder device 102 actuating the manual trigger 108 of the barcode decoder device 102.

As shown in block 804, the method 800 may include generating, by the one or more processors, second decoded barcode data by applying the image data to a fast linear decoder. As described above, in some embodiments, the barcode decoder device 102 is configured to generate decoded barcode data by applying image data to the fast linear decoder 506 that corresponds to the first barcode classification type. Said differently, for example, the barcode decoder device 102 may be configured to apply image data to the fast linear decoder 506 to generate decoded barcode data for barcodes of the one or more barcodes 112 that are associated with the first barcode classification type. In some embodiments, the barcode decoder device 102 is configured to use the processor 202 to apply image data to the fast linear decoder 506. In some embodiments, the barcode decoder device 102 is configured to generate decoded barcode data by applying image data to the fast linear decoder 506 in response to the fast linear finder 504 identifying barcodes in the one or more barcodes 112 that are associated with the first barcode classification type.

As shown in block 806, the method 800 may include generating, by the one or more processors, second decoded barcode data by applying the image data to an integrated decoder. As described above, in some embodiments, the barcode decoder device 102 is configured to generate decoded barcode data by applying image data to the integrated decoder 510 that corresponds to the second barcode classification type. Said differently, for example, the barcode decoder device 102 may be configured to apply image data to the integrated decoder 510 to generate decoded barcode data for barcodes of the one or more barcodes 112 that are associated with the second barcode classification type. In some embodiments, the barcode decoder device 102 is configured to use the processor 202 to apply image data to the integrated decoder 510. In some embodiments, the barcode decoder device 102 is configured to generate decoded barcode data by applying image data to the integrated decoder 510 in response to the integrated finder 508 identifying barcodes in the one or more barcodes 112 that are associated with the second barcode classification type.

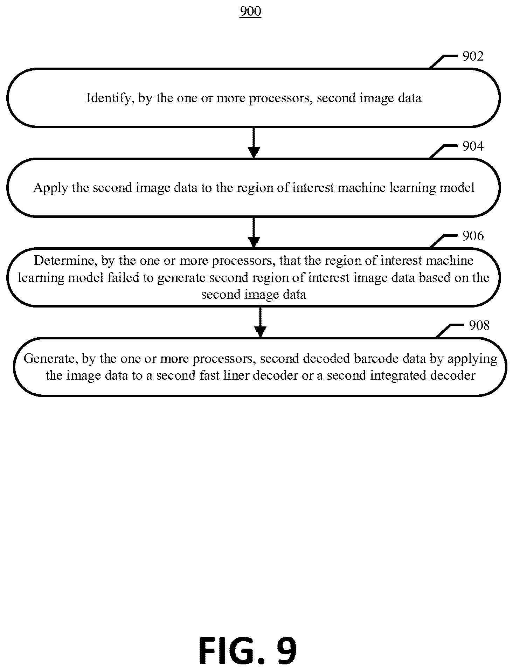

Referring now to FIG. 9, a flowchart providing an example method 900 is illustrated. In this regard, FIG. 9 illustrates operations that may be performed by barcode decoder device 102 and/or one or more components of the barcode decoder device 102. In some embodiments, the example method 900 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 900.

As shown in block 902, the method 900 may include identifying, by the one or more processors, second image data. As described above, in some embodiments, image data includes one or more items of data representative and/or indicative of an image 400 comprising the one or more barcodes 112 and/or optical character information 114. In this regard, for example, image data may be representative and/or indicative of an image 400 of the object 110. As another example, image data may be representative and/or indicative of a partial image of the object 110. As another example, image data may be representative and/or indicative of an image 400 of at least one of the one or more barcodes 112 and/or optical character information 114. As another example, image data may be representative and/or indicative of a partial image of at least one of the one or more barcodes 112 and/or optical character information 114.

In some embodiments, identifying image data includes the barcode decoder device 102 being configured to receive image data from one or more other devices. For example, the barcode decoder device 102 may be configured to identify image data by receiving image data from one or more other devices that have captured the image data. In some embodiments, identifying image data includes the barcode decoder device 102 being configured to capture image data. For example, the barcode decoder device 102 may be configured to identify image data by capturing image data using an image data identification component 502. In some embodiments, the image data identification component 502 includes the imaging lens 106 and/or the flash illumination source 104. In some embodiments, identifying image data includes the barcode decoder device 102 being configured to generate image data. For example, the barcode decoder device 102 may be configured to generate image data based on other data related to image data. In some embodiments, the barcode decoder device 102 is configured to use the processor 202 to identify image data. In some embodiments, the barcode decoder device 102 is configured to capture image data in response to a user associated with the barcode decoder device 102 actuating the manual trigger 108 of the barcode decoder device 102.

As shown in block 904, the method 900 may include applying the second image data to the region of interest machine learning model. As described above, in some embodiments, region of interest image data includes one or more items of data representative and/or indicative of one or more regions of interest 402 in the image 400 associated with image data. In this regard, in some embodiments, each region of interest in the one or more regions of interest 402 is associated with a corresponding barcode of the one or more barcodes 112. For example, a region of interest may be a portion of the image that includes a barcode in the one or more barcodes 112. Additionally, or alternatively, a region of interest may be a portion of the image that includes at least a portion of a barcode in the one or more barcodes 112. Said differently, for example, the one or more regions of interest 402 may be portions of an image 400 represented by image data that is relevant for decoding the one or more barcodes 112. In some embodiments, such as illustrated in FIG. 4, the one or more regions of interest 402 may include multiple regions of interest in a single image.

As shown in block 906, the method 900 may include determining, by the one or more processors, that the region of interest machine learning model failed to generate second region of interest image data based on the second image data. As described above, in some embodiments, the barcode decoder device 102 may configured to determine that the region of interest machine learning model 512 has failed to generate second region of interest image data based on second image data that the barcode decoder device 102 applied to the region of interest machine learning model 512. In some embodiments, the barcode decoder device 102 is configured to determine that the region of interest machine learning model 512 has failed to generate region of interest image data based on image data using the processor 202 and/or the neural processing unit 210.

In some embodiments, the barcode decoder device 102 is configured to determine that the region of interest machine learning model 512 has failed to generate region of interest image data when an image associated with image data includes at least one barcode and the region of interest machine learning model 512 does not identify any regions of interest in the image. For example, the barcode decoder device 102 may determine region of interest image data when the region of interest machine learning model 512 does not identify any of the one or more regions of interest 402 in the image 400. Additionally, or alternatively, the barcode decoder device 102 is configured to determine that the region of interest machine learning model 512 has failed to generate region of interest image data when the region of interest machine learning model 512 does not identify any regions of interest in an image associated with image data within a specified time limit. For example, the barcode decoder device 102 may be configured to determine that the region of interest machine learning model has failed to generate region of interest image data when the region of interest machine learning model 512 does not identify any of the one or more regions of interest 402 in the image 400 within a specified time limit.

As shown in block 908, the method 900 may include generating, by the one or more processors, second decoded barcode data by applying the image data to a fast linear decoder or an integrated decoder. As described above, in some embodiments, in response to determining that the region of interest machine learning model 512 has failed to generate region of interest image data, the barcode decoder device 102 is configured to generate second decoded barcode data by applying second image data to the fast linear decoder 506 and/or the integrated decoder 510. Said differently, for example, in response to determining that the region of interest machine learning model 512 has failed to generate region of interest image data, the barcode decoder device 102 is configured to use alternative means, such as the fast linear decoder 506 and/or the integrated decoder 510, to decode one or more of the one or more barcodes 112.

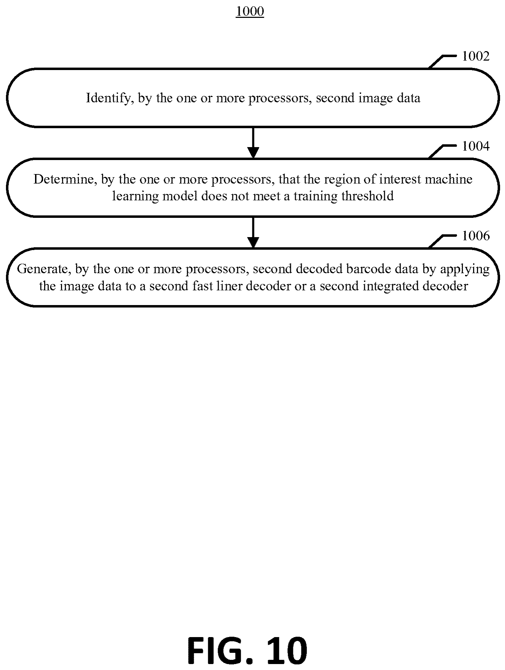

Referring now to FIG. 10, a flowchart providing an example method 1000 is illustrated. In this regard, FIG. 10 illustrates operations that may be performed by barcode decoder device 102 and/or one or more components of the barcode decoder device 102. In some embodiments, the example method 1000 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 1000.

As shown in block 1002, the method 1000 may include identifying, by the one or more processors, second image data. As described above, in some embodiments, image data includes one or more items of data representative and/or indicative of an image 400 comprising the one or more barcodes 112 and/or optical character information 114. In this regard, for example, image data may be representative and/or indicative of an image 400 of the object 110. As another example, image data may be representative and/or indicative of a partial image of the object 110. As another example, image data may be representative and/or indicative of an image 400 of at least one of the one or more barcodes 112 and/or optical character information 114. As another example, image data may be representative and/or indicative of a partial image of at least one of the one or more barcodes 112 and/or optical character information 114.

In some embodiments, identifying image data includes the barcode decoder device 102 being configured to receive image data from one or more other devices. For example, the barcode decoder device 102 may be configured to identify image data by receiving image data from one or more other devices that have captured the image data. In some embodiments, identifying image data includes the barcode decoder device 102 being configured to capture image data. For example, the barcode decoder device 102 may be configured to identify image data by capturing image data using an image data identification component 502. In some embodiments, the image data identification component 502 includes the imaging lens 106 and/or the flash illumination source 104. In some embodiments, identifying image data includes the barcode decoder device 102 being configured to generate image data. For example, the barcode decoder device 102 may be configured to generate image data based on other data related to image data. In some embodiments, the barcode decoder device 102 is configured to use the processor 202 to identify image data. In some embodiments, the barcode decoder device 102 is configured to capture image data in response to a user associated with the barcode decoder device 102 actuating the manual trigger 108 of the barcode decoder device 102.

As shown in block 1004, the method 1000 may include determining, by the one or more processors, that the region of interest machine learning model does not meet a training threshold. As described above, in some embodiments, the barcode decoder device 102 is configured to determine that the region of interest machine learning model 512 does not meet a training threshold by determining that the region of interest machine learning model 512 was trained using data that was not generated within a particular time period. In this regard, for example, the barcode decoder device 102 may be configured to determine that the region of interest machine learning model 512 does not meet a training threshold by determining that the region of interest machine learning model 512 was trained using stale data such that that any region of interest image data generated by the region of interest machine learning model 512 may not meet an accuracy threshold.

In some embodiments, the barcode decoder device 102 is configured to determine that the region of interest machine learning model 512 does not meet a training threshold by determining that the region of interest machine learning model 512 was trained using an amount of data that is less than a data amount threshold. In this regard, for example, the barcode decoder device 102 may be configured to determine that the region of interest machine learning model 512 does not meet a training threshold by determining that an insufficient amount of data was used to train the region of interest machine learning model 512 such that that any region of interest image data generated by the region of interest machine learning model 512 may not meet an accuracy threshold.

In some embodiments, the barcode decoder device 102 is configured to determine that the region of interest machine learning model 512 does not meet a training threshold by determining that the region of interest machine learning model 512 has not been trained within a particular time period. In this regard, for example, the barcode decoder device 102 may be configured to determine that the region of interest machine learning model 512 does not meet a training threshold by determining that the region of interest machine learning model 512 has not been trained recently enough such that any region of interest image data generated by the region of interest machine learning model 512 may not meet an accuracy threshold. Said differently, for example, the barcode decoder device 102 may be configured to determine that the region of interest machine learning model 512 does not meet a training threshold by determining that the region of interest machine learning model 512 is not sufficiently accurate.

As shown in block 1006, the method 1000 may include generating, by the one or more processors, second decoded barcode data by applying the image data to a fast linear decoder or an integrated decoder. As described above, in some embodiments, in response to determining that the region of interest machine learning model 512 does not meet a training threshold, the barcode decoder device 102 is configured to generate second decoded barcode data by applying second image data to the fast linear decoder 506 and/or the integrated decoder 510. Said differently, for example, in response to determining that the region of interest machine learning model 512 does not meet a training threshold, the barcode decoder device 102 is configured to use alternative, such as the fast linear decoder 506 and/or the integrated decoder 510, to decode one or more of the one or more barcodes 112.

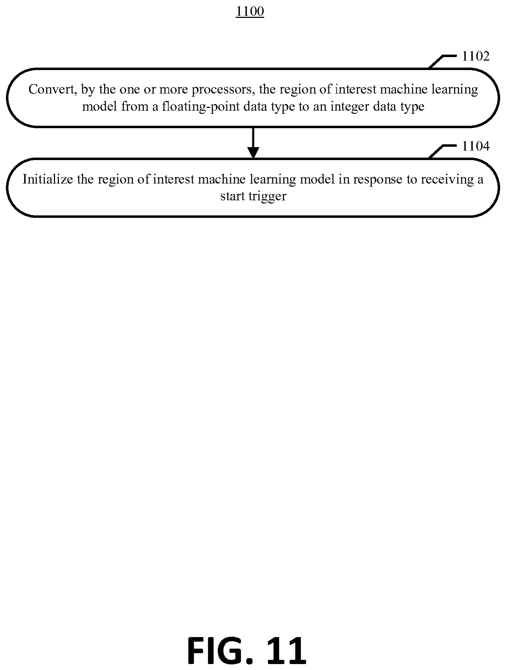

Referring now to FIG. 11, a flowchart providing an example method 1100 is illustrated. In this regard, FIG. 11 illustrates operations that may be performed by barcode decoder device 102 and/or one or more components of the barcode decoder device 102. In some embodiments, the example method 1100 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 1100.

As shown in block 1102, the method 1100 may include converting, by the one or more processors, the region of interest machine learning model from a floating-point data type to an integer data type. As described above, in some embodiments, the barcode decoder device 102 may be configured to convert the region of interest machine learning model 512 from a floating-point data type to an 8-bit integer data type. In some embodiments, by converting the region of interest machine learning model 512 from a floating-point data type to an integer data type, the region of interest machine learning model is able to generate region of interest image data faster. In this regard, in some embodiments, the barcode decoder device 102 is configured to decode barcodes faster than if the region of interest machine learning model 512 was not converted from a floating-point data type to an integer data type. In some embodiments, the barcode decoder device 102 is configured to convert the region of interest machine learning model 512 from a floating-point data type to an integer data type using the processor 202 and/or the neural processing unit 210. In some embodiments, converting the region of interest machine learning model 512 from a floating-point data type to an integer data type is performed in accordance with a quantization technique.

As shown in block 1104, the method 1100 may include initializing the region of interest machine learning model in response to receiving a start trigger. As described above, in some embodiments, the barcode decoder device 102 is configured to initialize the region of interest machine learning model 512. In some embodiments, initializing the region of interest machine learning model 512 includes the barcode decoder device 102 loading the region of interest machine learning model 512 into memory 204 in a format that can be executed by the neural processing unit 210. In some embodiments, initialization of the region of interest machine learning model 512 includes generating and/or loading computational graph(s) as commands in memory 204 for execution by the neural processing unit 210. In some embodiments, once the region of interest machine learning model 512 is initialized, the region of interest machine learning model 512 may be configured to generate region of interest image data in response to the barcode decoder device 102 identifying image data. Said differently, initializing includes preloading the model so that the model can generate region of interest image data as soon as image data is identified by the barcode decoder device 102. In some embodiments, by initializing the region of interest machine learning model 512, the barcode decoder device 102 is configured to decode barcodes faster than if the region of interest machine learning model 512 was not initialized.

In some embodiments, the barcode decoder device 102 is configured to initialize the region of interest machine learning model 512 in response to receiving a start trigger. In some embodiments, a start trigger is a trigger that causes the barcode decoder device 102 to initialize the region of interest machine learning model 512. For example, a start trigger may be a trigger that is generated when the barcode decoder device is turned on (e.g., by a user associated with the barcode decoder device 102.

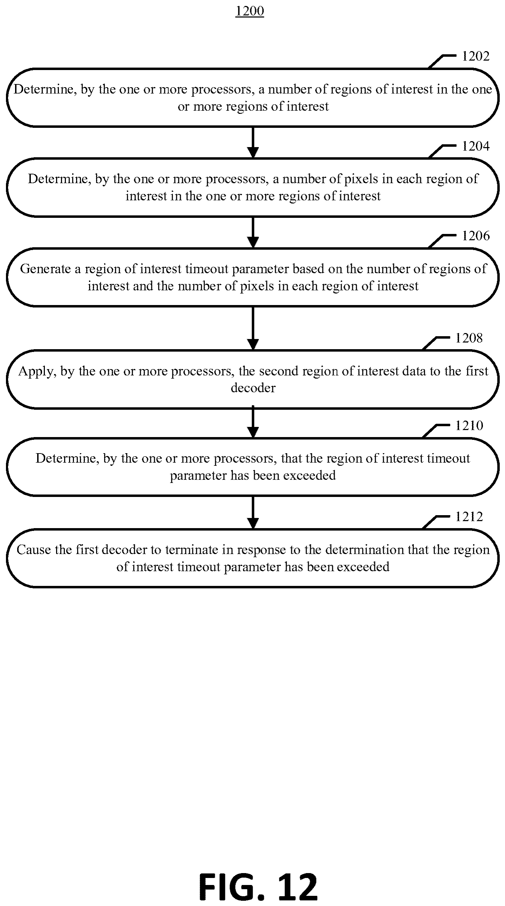

Referring now to FIG. 12, a flowchart providing an example method 1200 is illustrated. In this regard, FIG. 12 illustrates operations that may be performed by barcode decoder device 102 and/or one or more components of the barcode decoder device 102. In some embodiments, the example method 1200 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 1200.

As shown in block 1202, the method 1200 may include determining, by the one or more processors, a number of regions of interest in the one or more regions of interest. As described above, in some embodiments, the barcode decoder device 102 may be configured to determine that there are three regions of interest in the one or more regions of interest 402 of the image 400.

As shown in block 1204, the method 1200 may include determining, by the one or more processors, a number of pixels in each region of interest in the one or more regions of interest. As described above, in some embodiments, the barcode decoder device 102 may be configured to determine the number of pixels in each of the three regions of interest in the one or more regions of interest 402 of the image 400 (e.g., the size of each region of interest by the number of pixels).

As shown in block 1206, the method 1200 may include generating a region of interest timeout parameter based on the number of regions of interest and the number of pixels in each region of interest. As described above, in some embodiments, the barcode decoder device 102 is configured to generate a region of interest timeout parameter. In some embodiments, the barcode decoder device 102 is configured to generate a region of interest timeout parameter based on the number of regions of interest and the number of pixels in each region of interest. In this regard, for example, the barcode decoder device 102 may be configured to generate a region of interest timeout parameter using equation (1):

$$(1) \; region \; of \; interest \; timeout \; parameter = \sum_{0}^{n} (Tc * A * Troi) + Tbase$$

wherein n is the number of regions of interest in an image, Tc is the amount of time per pixel (e.g., one hundred nanoseconds, A is the number of pixels in each region of interest (e.g., the area), Troi is the region of interest process time (e.g., the amount of time to process a region of interest), and Tbase is a base timeout time.

As shown in block 1208, the method 1200 may include applying, by the one or more processors, second region of interest image data to the first decoder. As shown in block 1210, the method 1200 may include determining, by the one or more processors, that the region of interest timeout parameter has been exceeded. As described above, in some embodiments, the barcode decoder device 102 is configured to determine that the region of interest timeout parameter has been exceeded. In some embodiments, the barcode decoder device 102 is configured to determine that the region of interest timeout parameter has been exceeded when the barcode decoder device 102 has applied region of interest image data to the first decoder 518 and the first decoder 518 has not decoded one or more barcodes associated with the region of interest image data within a particular amount of time.

As shown in block 1212, the method 1200 may include causing the first decoder to terminate in response to the determination that the region of interest timeout parameter has been exceeded. As described above, in some embodiments, the barcode decoder device 102 is configured to cause the first decoder to terminate in response to the determination that the region of interest timeout parameter has been exceeded. In this regard, in some embodiments, a region of interest timeout parameter is representative of an amount of time that the barcode decoder device 102 allows the first decoder 518 to have to decode a barcode associated with the region of interest image data before the barcode decoder device 102 causes the first decoder 518 to terminate execution. In some embodiments, the region of interest timeout parameter is a dynamic parameter in that it is adjusted based on the number of regions of interest that are associated with region of interest image data and/or the number of pixels in each region of interest (e.g., the size of each region of interest). In this regard, the barcode decoder device 102 is able to increase barcode decoding speed by ensuring that the first decoder does not spend excessive time decoding a barcode while maintaining a high level of accuracy of barcode decoding by ensuring that the first decoder 518 is not terminated too soon. For example, if the barcode decoder device 102 determines that the region of interest timeout parameter has been exceeded, the barcode decoder device 102 may be configured to apply other region of interest image data to the first decoder 518 to decode a barcode, which increases decoding speeds as the barcode decoder device 102 does not waste time trying to decode a barcode that might not be possible for the barcode decoder device 102 to decode (e.g., because the image of the barcode is not clear).

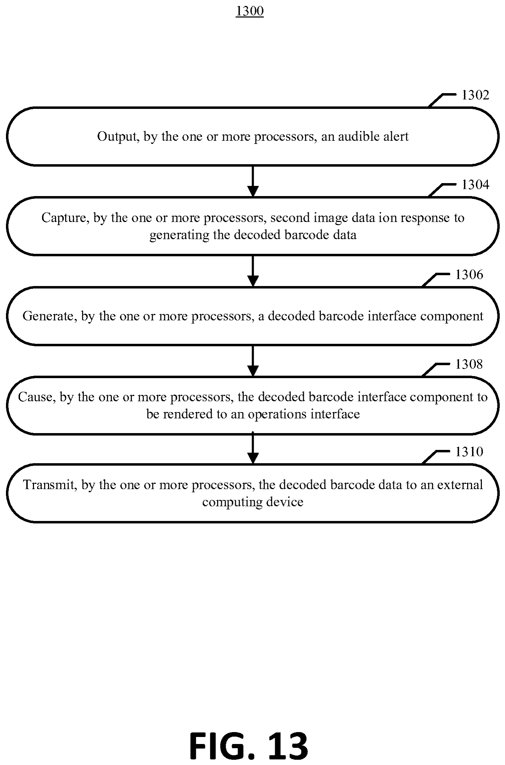

Referring now to FIG. 13, a flowchart providing an example method 1300 is illustrated. In this regard, FIG. 13 illustrates operations that may be performed by barcode decoder device 102 and/or one or more components of the barcode decoder device 102. In some embodiments, the example method 1300 defines a computer-implemented process, which may be executable by any of the device(s) and/or system(s) embodied in hardware, software, firmware, and/or a combination thereof, as described herein. In some embodiments, computer program code including one or more computer-coded instructions are stored to at least one non-transitory computer-readable storage medium, such that execution of the computer program code initiates performance of the method 1300.

As shown in block 1302, the method 1300 may include outputting, by the one or more processors, an audible alert. As described above, in some embodiments, the barcode decoder device 102 may be configured to output a first audible alert when a barcode in the one or more barcodes 112 is successfully decoded. As another example, the barcode decoder device 102 may be configured to output a second audible alert when a barcode in the one or more barcodes is not successfully decoded. For example, the barcode decoder device 102 may be configured to output the second audible alert when the barcode decoder device 102 determines that the region of interest timeout parameter has been exceeded. In some embodiments, an audible alert may be outputted via the output component 320 of the barcode decoder device 102. In this regard, for example, the output component 320 may be a microphone.

As shown in block 1304, the method 1300 may include capturing, by the one or more processors, second image data in response to generating the decoded barcode data. As described above, in some embodiments, the barcode decoder device 102 may be configured to capture second image data. In this regard, in some embodiments, the barcode decoder device 102 is configured to automatically capture new image data in response to generating decoded barcode data without interaction with the barcode decoder device 102 by a user associated with the barcode decoder device 102.

As shown in block 1306, the method 1300 may include generating, by the one or more processors, a decoded barcode interface component. As described above, in some embodiments, the decoded barcode interface component 602 includes one or more decoded barcode interface elements 604. In some embodiments, the one or more decoded barcode interface elements 604 are configured to display decoded barcode data. In this regard, for example, the one or more decoded barcode interface elements 604 may be configured to display a decoded barcode that was determined by the barcode decoder device. In some embodiments, the decoded barcode interface component 602 includes one or more action interface elements 608. In some embodiments, the one or more action interface elements 608 are configured to be selected to cause the barcode decoder device 102 to perform an action. For example, the one or more action interface elements 608 may be selected to cause the barcode decoder device 102 to capture image data.

As shown in block 1308, the method 1300 may include causing, by the one or more processors, the decoded barcode interface component to be rendered to an operations interface. As described above, in some embodiments, the operations interface 600 may be provided by the output component 520 of the barcode decoder device 102. In this regard, for example, the output component 520 may be a display panel.

As shown in block 1310, the method 1300 may include transmitting, by the one or more processors, the decoded barcode data to an external computing device. As described above, in some embodiments, the barcode decoder device 102 may be configured to transmit decoded barcode data to an external computing device that includes an inventory management system. As another example, the barcode decoder device 102 may be configured to transmit decoded barcode data to an external computing device that is another barcode decoding system.

Operations and/or functions of the present disclosure have been described herein, such as in flowcharts. As will be appreciated, computer program instructions may be loaded onto a computer or other programmable apparatus (e.g., hardware) to produce a machine, such that the resulting computer or other programmable apparatus implements the operations and/or functions described in the flowchart blocks herein. These computer program instructions may also be stored in a computer-readable memory that may direct a computer, processor, or other programmable apparatus to operate and/or function in a particular manner, such that the instructions stored in the computer-readable memory produce an article of manufacture, the execution of which implements the operations and/or functions described in the flowchart blocks. The computer program instructions may also be loaded onto a computer, processor, or other programmable apparatus to cause a series of operations to be performed on the computer, processor, or other programmable apparatus to produce a computer-implemented process such that the instructions executed on the computer, processor, or other programmable apparatus provide operations for implementing the functions and/or operations specified in the flowchart blocks. The flowchart blocks support combinations of means for performing the specified operations and/or functions and combinations of operations and/or functions for performing the specified operations and/or functions. It will be understood that one or more blocks of the flowcharts, and combinations of blocks in the flowcharts, can be implemented by special purpose hardware-based computer systems which perform the specified operations and/or functions, or combinations of special purpose hardware with computer instructions.

While this specification contains many specific embodiments and implementation details, these should not be construed as limitations on the scope of any disclosures or of what may be claimed, but rather as descriptions of features specific to particular embodiments of particular disclosures. Certain features that are described herein in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

While operations and/or functions are illustrated in the drawings in a particular order, this should not be understood as requiring that such operations and/or functions be performed in the particular order shown or in sequential order, or that all illustrated operations be performed, to achieve desirable results. In certain circumstances, operations and/or functions in alternative ordering may be advantageous. In some cases, the actions recited in the claims may be performed in a different order and still achieve desirable results. Thus, while particular embodiments of the subject matter have been described, other embodiments are within the scope of the following claims.

Similarly, while operations are illustrated in the drawings in a particular order, this should not be understood as requiring that such operations be performed in the particular order shown or in sequential order, or that all illustrated operations be performed, to achieve desirable results. In certain circumstances, operations in alternative ordering may be advantageous. In some cases, the actions recited in the claims may be performed in a different order and still achieve desirable results.

## Claims

1. A method comprising:

identifying, by one or more processors, image data, wherein the image data is representative of an image comprising one or more barcodes;
generating, by a neural processing unit, region of interest image data by applying the image data to a region of interest machine learning model, wherein the region of interest image data is representative of one or more regions of interest in the image, wherein each of the one or more regions of interest are associated with at least one corresponding barcode of the one or more barcodes;

generating, by the one or more processors, decoded barcode data by applying the region of interest image data to a first decoder, wherein the first decoder is a region of interest fast linear decoder or a region of interest integrated decoder; and

initiating, by the one or more processors, performance of one or more actions based at least in part on the decoded barcode data.

2. The method of claim 1, further comprising:

identifying, by the one or more processors, second image data, wherein the second image data is representative of a second image comprising one or more other barcodes; and

generating, by the one or more processors, second decoded barcode data by applying the image data to a fast linear decoder.

3. The method of claim 1, further comprising:

identifying, by the one or more processors, second image data, wherein the second image data is representative of a second image comprising one or more other barcodes; and

generating, by the one or more processors, second decoded barcode data by applying the image data to an integrated decoder.

4. The method of claim 1, further comprising:

identifying, by the one or more processors, second image data, wherein the second image data is representative of a second image comprising one or more other barcodes;

applying the second image data to the region of interest machine learning model;

determining, by the one or more processors, that the region of interest machine learning model failed to generate second region of interest image data based on the second image data; and

generating, by the one or more processors, second decoded barcode data by applying the image data to a fast linear decoder or an integrated decoder.

5. The method of claim 1, further comprising:

identifying, by the one or more processors, second image data, wherein the second image data is representative of a second image comprising one or more other barcodes;

determining, by the one or more processors, that the region of interest machine learning model does not meet a training threshold; and

generating, by the one or more processors, second decoded barcode data by applying the image data to a fast linear decoder or an integrated decoder.

6. The method of claim 1, further comprising:
processing, by the neural processing unit, the region of interest image data in one or more of a plurality of preprocessing machine learning models.

7. The method of claim 6, wherein the plurality of preprocessing machine learning models comprises one or more of a light preprocessing machine learning model, a contrast preprocessing machine learning model, a resolution pre-processing machine learning model, or a deblurring preprocessing machine learning model.

8. The method of claim 1, wherein the region of interest machine learning model is associated with one of a plurality of integer data types, wherein the plurality of integer data types includes a 32-bit integer data type, 16-bit integer data type, an 8-bit integer data type, and a 4-bit integer data type.

9. The method of claim 1, further comprising:

identifying, by the one or more processors, second image data, wherein the second image data is representative of a second image comprising optical character information; and

generating, by the neural processing unit, second region of interest image data by applying the second image data to the region of interest machine learning model, wherein the second region of interest image data is representative of one or more second regions of interest in the image, wherein each of the one or more second regions of interest are associated with the optical character information.

10. The method of claim 1, further comprising:

converting, by the one or more processors, the region of interest machine learning model from a floating-point data type to an integer data type; and
initializing the region of interest machine learning model in response to receiving a start trigger.

11. The method of claim 1, further comprising:
training, by the neural processing unit, the region of interest machine learning model based at least in part on one or more of historical image data, historical region of interest image data, or historical decoded barcode data.

12. The method of claim 1, further comprising:

determining, by the one or more processors, a number of regions of interest in the one or more regions of interest;
determining, by the one or more processors, a number of pixels in each region of interest in the one or more regions of interest; and
generating a region of interest timeout parameter based on the number of regions of interest and the number of pixels in each region of interest.

13. The method of claim 12, further comprising:

applying, by the one or more processors, second region of interest image data to the first decoder;
determining, by the one or more processors, that the region of interest timeout parameter has been exceeded; and
causing the first decoder to terminate in response to the determination that the region of interest timeout parameter has been exceeded.

14. An apparatus comprising memory and one or more processors communicatively coupled to the memory, the one or more processors configured to:

identify, by the one or more processors, image data, wherein the image data is representative of an image comprising one or more barcodes;
generate, by a neural processing unit, region of interest image data by applying the image data to a region of interest machine learning model, wherein the region of interest image data is representative of one or more regions of interest in the image, wherein each of the one or more regions of interest are associated with at least one corresponding barcode of the one or more barcodes;
generate, by the one or more processors, decoded barcode data by applying the region of interest image data to a first decoder, wherein the first decoder is a region of interest fast linear decoder or a region of interest integrated decoder; and
initiate, by the one or more processors, performance of one or more actions based at least in part on the decoded barcode data.

15. A computer program product comprising at least one non-transitory computer-readable storage medium having computer program code stored thereon that, in execution with one or more processors, configures the computer program product for:

identifying, by the one or more processors, image data, wherein the image data is representative of an image comprising one or more barcodes;
generating, by a neural processing unit, region of interest image data by applying the image data to a region of interest machine learning model, wherein the region of interest image data is representative of one or more regions of interest in the image, wherein each of the one or more regions of interest are associated with at least one corresponding barcode of the one or more barcodes;
generating, by the one or more processors, decoded barcode data by applying the region of interest image data to a first decoder, wherein the first decoder is a region of interest fast linear decoder or a region of interest integrated decoder; and
initiating, by the one or more processors, performance of one or more actions based at least in part on the decoded

barcode data.

110

112

114

112

102

104

106

108

EP 4 733 983 A1

**FIG. 1**

**FIG. 2**

FIG. 3

EP 4 733 983 A1

**FIG. 4**

**FIG. 5**

FIG. 6

700

702

Identify, by one or more processors, image data

704

Generate, by a neural processing unit, region of interest image data by applying the image data to a region of interest machine learning model

706

Generate, by the one or more processors, decoded barcode data by applying the region of interest image data to a first decoder

708

Initiate, by the one or more processors, performance of one or more actions based at least in part on the decoded barcode data

710

Process, by the neural processing unit, the region of interest image data in one or more of a plurality of preprocessing machine learning models

712

Train, by the neural processing unit, the region of interest machine learning model based at least in part on one or more of historical image data, historical region of interest image data, or historical decoded barcode data

714

Generate, by the one or more processors, one or more status flags associated with the region of interest image data

716

Store, by the one or more processors, the one or more status flags

718

Identify, by the one or more processors, second image data

720

Generate, by the neural processing unit, second region of interest image data by applying the second image data to the region of interest machine learning model

# FIG. 7

<u>800</u>

802

Identify, by the one or more processors, second image data

804

Generate, by the one or more processors, second decoded barcode data by applying the image data to a second fast linear decoder

806

Generate, by the one or more processors, second decoded barcode data by applying the image data to a second integrated decoder

# FIG. 8

900

902

Identify, by the one or more processors, second image data

904

Apply the second image data to the region of interest machine learning model

906

Determine, by the one or more processors, that the region of interest machine learning model failed to generate second region of interest image data based on the second image data

908

Generate, by the one or more processors, second decoded barcode data by applying the image data to a second fast liner decoder or a second integrated decoder

# FIG. 9

1000

1002

Identify, by the one or more processors, second image data

1004

Determine, by the one or more processors, that the region of interest machine learning model does not meet a training threshold

1006

Generate, by the one or more processors, second decoded barcode data by applying the image data to a second fast liner decoder or a second integrated decoder

# FIG. 10

1100

1102

Convert, by the one or more processors, the region of interest machine learning model from a floating-point data type to an integer data type

1104

Initialize the region of interest machine learning model in response to receiving a start trigger

# FIG. 11

1200

1202

Determine, by the one or more processors, a number of regions of interest in the one or more regions of interest

1204

Determine, by the one or more processors, a number of pixels in each region of interest in the one or more regions of interest

1206

Generate a region of interest timeout parameter based on the number of regions of interest and the number of pixels in each region of interest

1208

Apply, by the one or more processors, the second region of interest data to the first decoder

1210

Determine, by the one or more processors, that the region of interest timeout parameter has been exceeded

1212

Cause the first decoder to terminate in response to the determination that the region of interest timeout parameter has been exceeded

# FIG. 12

1300

1302

Output, by the one or more processors, an audible alert

1304

Capture, by the one or more processors, second image data ion response to generating the decoded barcode data

1306

Generate, by the one or more processors, a decoded barcode interface component

1308

Cause, by the one or more processors, the decoded barcode interface component to be rendered to an operations interface

1310

Transmit, by the one or more processors, the decoded barcode data to an external computing device

# FIG. 13

**EUROPEAN SEARCH REPORT**

Europäisches Patentamt
European Patent Office
Office européen des brevets

Application Number

EP 25 20 3978

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 12 039 398 B1 (KOTLARSKY ANATOLY [US] ET AL) 16 July 2024 (2024-07-16) | 1-11,14, 15 | INV.<br>G06K7/14<br>G06V10/25 |
| A | * abstract *<br>* column 1, line 22 - column 2, line 24 *<br>* line 62, paragraph 6 - line 15, paragraph 7 *<br>* figures * | 12,13 | |
| X | WO 2024/182094 A1 (ZEBRA TECH CORP [US]) 6 September 2024 (2024-09-06) | 1-11,14, 15 | |
| A | * abstract *<br>* paragraph [0002] - paragraph [0005] *<br>* figures * | 12,13 | |
| A | US 2023/267293 A1 (SCHÜLER PASCAL [DE] ET AL) 24 August 2023 (2023-08-24)<br>* paragraph [0001] - paragraph [0005] *<br>* paragraph [0016] - paragraph [0021] *<br>* figures *<br>* abstract * | 1-15 | |

TECHNICAL FIELDS SEARCHED (IPC)

G06K
G06F
G06V

The present search report has been drawn up for all claims

| Place of search | Date of completion of the search | Examiner |
|---|---|---|
| Munich | 20 February 2026 | Berger, Christian |

## EP 4 733 983 A1

### ANNEX TO THE EUROPEAN SEARCH REPORT
### ON EUROPEAN PATENT APPLICATION NO.

EP 25 20 3978

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2026

| Patent document cited in search report | | Publication date | Patent family member(s) | | Publication date |
|---|---|---|---|---|---|
| US 12039398 | B1 | 16-07-2024 | DE | 112024000390 T5 | 09-10-2025 |
| | | | US | 12039398 B1 | 16-07-2024 |
| | | | WO | 2024182069 A1 | 06-09-2024 |
| WO 2024182094 | A1 | 06-09-2024 | AU | 2024230116 A1 | 04-09-2025 |
| | | | CN | 120752642 A | 03-10-2025 |
| | | | DE | 112024001127 T5 | 31-12-2025 |
| | | | US | 2024289604 A1 | 29-08-2024 |
| | | | WO | 2024182094 A1 | 06-09-2024 |
| US 2023267293 | A1 | 24-08-2023 | CN | 116630946 A | 22-08-2023 |
| | | | EP | 4231195 A1 | 23-08-2023 |
| | | | ES | 2988422 T3 | 20-11-2024 |
| | | | JP | 2023121722 A | 31-08-2023 |
| | | | KR | 20230125749 A | 29-08-2023 |
| | | | US | 2023267293 A1 | 24-08-2023 |

EPO FORM P0459

For more details about this annex : see Official Journal of the European Patent Office, No. 12/82

44